# EUROPÄISCHE PATENTANMELDUNG

(11) **EP 4 556 681 A1**
(43) Veröffentlichungstag der Anmeldung: **21.05.2025**
(21) Anmeldenummer: 23210778.9
(22) Anmeldetag: 17.11.2023
(51) Int. Cl.: E21D 9/06, F16J 15/40

(54) **HAUPTANTRIEBSDICHTUNGSSYSTEM FÜR EINE TUNNELBOHRMASCHINE**

(71) Anmelder: HERRENKNECHT AKTIENGESELLSCHAFT, 77963 Schwanau (DE)
(72) Erfinder: Münchbach, Markus, 79276 Reute (DE); Isele, Dietmar, 79365 Rheinhausen (DE)
(74) Vertreter: Klickow & Wetzel PartGmbB

(57) **Zusammenfassung**

Die Erfindung betrifft ein Hauptantriebsdichtungssystem für eine Antriebswelle eines Schneidrades einer Tunnelbohrmaschine, das wenigstens ein Druckbeaufschlagungs- uznd Druckregelungssystem aufweist, das wenigstens eine elektronische Steuerung (80) aufweist, die wenigstens eine Datenspeichereinheit, wenigstens eine Datenverarbeitungseinheit und wenigstens eine Steuerbefehlausgabeeinheit aufweist, wobei die elektronische Steuerung (80) ein Steuerprogramm aufweist u.a. mit den folgenden Schritten:
Berechnen einer Druckdifferenz Δpi zwischen pi-SOLL und pi-IST, wobei i die Nummer der Kammer ist, deren IST-Druck geregelt wird, und prüfen, ob Δpi in einem Bereich x<0<y liegt, wobei x, y eine untere Intervallgrenze und eine obere Intervallgrenze sind,
wobei, wenn Δpi in dem Bereich x<0<y liegt, das erste Druckluftschaltventil (21, 21', 31, 41) der wenigstens einen Kammer i (P2, P2`, P3, P4) und das zweite Druckluftschaltventil (22, 23, 22`, 23`, 32, 33, 42, 43) der wenigstens einen Kammer i (P2, P2`, P3, P4) so angesteuert werden, dass sie geschlossen sind, wobei, wenn Δpi > y ist, das erste Druckluftschaltventil (21, 21', 31, 41) der wenigstens einen Kammer i (P2, P2`, P3, P4) so angesteuert wird, dass es geöffnet wird, wobei das zweite Druckluftschaltventil (22, 23, 22`, 23`, 32, 33, 42, 43) der wenigstens einen Kammer i (P2, P2`, P3, P4) so angesteuert ist, dass es geschlossen ist, und wobei, wenn Δpi < x ist, das zweite Druckluftschaltventil (22, 23, 22`, 23`, 32, 33, 42, 43) der wenigstens einen Kammer i (P2, P2`, P3, P4) so angesteuert wird, dass es geöffnet wird, wobei das erste Druckluftschaltventil (21, 21', 31, 41) der wenigstens einen Kammer i (P2, P2`, P3, P4) so angesteuert ist, dass es geschlossen ist.

## Beschreibung

### Technisches Gebiet

Die vorliegende Anmeldung betrifft das technische Gebiet der Tunnelbohrmaschinen, insbesondere eine flüssigkeitsgestützte oder erddruckgestützte Tunnelbohrmaschine mit einem Schneidrad. Solche Tunnelbohrmaschinen weisen insbesondere ein Hauptantriebswellendichtungssystem für die Antriebswelle des Schneidrads auf.

Insbesondere betrifft die vorliegende Anmeldung ein Hauptantriebsdichtungssystem für eine Antriebswelle eines Schneidrades einer Tunnelbohrmaschine mit wenigstens einem Raum mit einem ersten Druck hinter einem Schneidrad, aufweisend wenigstens eine erste Kammer mit einem ersten Druck, wobei es sich bevorzugt bei der ersten Kammer um eine mit einem Sperrfett (HBW) gefüllte Labyrinthkammer handelt, wenigstens eine zweite Kammer mit einem zweiten Druck, wobei es sich bei der wenigstens einen zweiten Kammer um eine Öl- und Druckluftdichtungskammer handelt, wenigstens eine Dichtung zwischen der wenigstens einen ersten Kammer und der wenigstens eine zweiten Kammer, die einem Differenzdruck ΔpL1 zwischen der wenigstens einen ersten Kammer und der wenigstens einen zweiten Kammer widerstehen kann, wenigstens einen Drucklufteingangsanschluss, wenigstens eine Druckluftablassleitung, wenigstens ein erstes Druckluftschaltventil der wenigstens einen zweiten Kammer mit wenigstens einem Drucklufteinlass und wenigstens einem Druckluftauslass, wobei das erstes Druckluftschaltventil der wenigstens einen zweiten Kammer so eingerichtet ist, dass es zwischen einer offenen und einer geschlossenen Stellung schaltbar ist, wenigstens ein zweites Druckluftschaltventil der wenigstens einen zweiten Kammer mit wenigstens einem Drucklufteinlass und wenigstens einem Druckluftauslass, wobei das zweites Druckluftschaltventil der wenigstens einen zweiten Kammer so eingerichtet ist, dass es zwischen einer offenen und einer geschlossenen Stellung schaltbar ist, wenigstens einen Einlass des Drucklufteingangsanschlusses, der so konfiguriert ist, dass er mit einer Druckluftquelle pneumatisch verbindbar ist, wenigstens einen Auslass des Drucklufteingangsanschlusses, der pneumatisch über eine Druckluftleitung mit dem wenigstens einen Drucklufteinlass des ersten Druckluftschaltventil der wenigstens einen zweiten Kammer verbunden ist, wobei der wenigstens eine Druckluftauslass des ersten Druckluftschaltventils der wenigstens einen zweiten Kammer mit dem wenigstens einen Drucklufteinlass des zweiten Druckluftschaltventils der wenigstens einen zweiten Kammer und der wenigstens einen zweiten Kammer pneumatisch verbunden ist, und wobei ein Druckluftauslass des zweiten Druckluftschaltventils der wenigstens einen zweiten Kammer mit der Druckluftablassleitung pneumatisch verbunden ist, sowie ein Verfahren zur Regelung des Drucks in einem Hauptantriebsdichtungssystem für eine Tunnelbohrmaschine.

### Hintergrund

Der Bau von Tunneln mit großem Querschnitt, großer Verlegetiefe, hohem Wasserdruck und über große Distanzen geht mit komplizierten und rauen Arbeitsbedingungen einher.

Bei hohem Wasserdruck, z. B. beim Tunnelbau unter einem Gewässer wie einem Fluss oder dem Meer, sollte für den Tunnelbau eine flüssigkeitsgestützte oder erddruckgestützte Tunnelbohrmaschine verwendet werden. Gegenwärtig ist dabei eine sichere und zuverlässige Methode der Einsatz einer Tunnelbohrmaschinen mit Druckluftstützung.

Der Hauptantrieb ist ein wichtiger Teil einer flüssigkeitsgestützten oder erddruckgestützten Tunnelbohrmaschine. Die Dichtungsleistung des Hauptantriebs bestimmt direkt die Wasser- und Bodendrucktragfähigkeit der Tunnelbohrmaschine. Gegenwärtig wird für den Hauptantrieb der Tunnelbohrmaschine ein Dichtsystem aus Gummilippendichtungen verwendet. Dabei sind in der Regel vier Dichtlippen vorgesehen. Außerhalb der ersten Dichtlippe befindet sich eine Labyrinthkammer, in die kontinuierlich HBW-Fett als Verlustschmierung eingespritzt wird, um dem Eindringen von Flüssigkeit oder Erdbrei von außen entgegenzuwirken. Anschließend ist eine Fettkammer P1 vorgesehen, die durch die erste und eine zweite Dichtlippe gebildet wird. Diese wird kontinuierlich mit Fett EP2 auf Verlust gefüllt, was einerseits die Dichtungskapazität des Hauptantriebs weiter verbessert und andererseits die Dichtlippen 1 und 2 schmiert, um den Verschleiß zu verringern. Anschließend folgt eine Öl- und Druckluftdichtungskammer P2, die durch die zweite und dritte Dichtlippe gebildet wird. Das Öl wird zur Schmierung der Dichtungen 2 und 3 eingesetzt. Wenn der Druck in der Abbaukammer einen bestimmten Wert übersteigt, werden Getriebeöl und/oder Luft in diese Kammer eingespritzt, um die Dichtlippen zu stützen. Die dritte Dichtlippe und die vierte Dichtlippe sind im Allgemeinen einander gegenüberliegend installiert, um eine Leckageerkennungskammer P3 zu bilden. Die vierte Dichtlippe ist hauptsächlich so konfiguriert, dass sie ein Getriebe P4 abdichtet, um zu verhindern, dass das interne Getriebeöl ausläuft.

Die Tragfähigkeit einer einzelnen Gummilippendichtung beträgt im Allgemeinen etwa 3 bar. Wenn der Wasser- und Bodendruck weniger als 3 bar beträgt, kann der äußere Wasser- und Bodendruck in der Abbaukammer durch den Fettdruck der Fettkammer P1 aufgefangen werden, so dass die Dichtung des Hauptantriebs zuverlässig funktioniert.

Wenn der Wasser- und Bodendruck größer als 3 bar und kleiner als 6 bar ist, kann der Gesamtdruck, der von der Öl- und Druckluftdichtungskammer P2 und der Fettkammer P1 als Gegendruck bereitgestellt wird, auch dem externen Wasser- und Bodendruck in der Abbaukammer standhalten.

Ein System für die Kammer 1 mit HBW und Kammer 2 mit EP2 ist in CN106223964B offenbart. Hier ist ein Verfahren zur Steuerung eines Dichtungsdrucks eines Hauptlagers einer Schildvortriebsmaschine in der HBW-Kammer und der EP2-Kammer des Dichtungssystems offenbart. Der HBW- Fettverlustschmierung umfasst eine pneumatische HBW-Quelle 1 und eine HBW-Fetteinspritzöffnung 16. Die pneumatische HBW-Quelle 1 und die HBW-Fetteinspritzöffnung 16 sind durch die HBW-Versorgungsleitung 2 verbunden. In der HBW-Versorgungsleitung 2 sind nacheinander ein HBW-Versorgungsdruckmesser 3, ein HBW-Zweiwege-Magnetventil 4, ein HBW-Filter 5, ein voreingestellten HBW-Proportionaldruckreduzierventil 6 und ein HBW-Drucksensor 7 installiert. Die EP2-Fettschmierung umfasst eine pneumatische EP2-Quelle 8 und eine EP2-Fetteinspritzöffnung 17. Die pneumatische EP2-Quelle 8 und die EP2-Fetteinspritzöffnung 17 sind durch die EP2-Versorgungsleitung 9 verbunden. In der HBW-Versorgungsleitung 9 sind nacheinander ein EP2-Versorgungsdruckmesser 10, ein EP2-Zweiwege-Magnetventil 22, ein EP2-Filter 12, ein voreingestellten EP2-Proportionaldruckreduzierventil 13 und ein HBW-Drucksensor 14 sowie eine EP2 multi-point Schmierpumpe 15 installiert.

Das Verfahren zur Steuerung des Dichtungsdrucks umfasst die Schritte:
1. Eingeben eines Δp1 und Δp2 in einem Steuerprogramm der Tunnelbohrmaschine, wobei Δp1 und Δp2 nicht 0 sind und Δp1 > Δp2; Δp1 ist die Druckdifferenz zwischen dem Druck p0 der Abbaukammer und dem Druck p1 hinter dem voreingestellten HBW-Proportionaldruckreduzierventil 6, der durch den HBW-Drucksensor 7 gemessen wird und Δp2 ist die Druckdifferenz zwischen dem Druck p2 hinter dem voreingestellten EP2-Proportionaldruckreduzierventil 13, der durch den EP2-Drucksensor 14 gemessen wird, und dem Druck p1 hinter dem voreingestellten HBW-Proportionaldruckreduzierventil 6.
2. Erfassen von P0 in der Abbaukammer hinter dem Schneidrad;
3. Einstellen des HBW-Drucks p1 in Relation zu dem Druck p0 der Abbaukammer, in dem gilt P1 = P0 + Δp1.
4. Einstellen des EP2-Drucks p2 in Relation zu dem HBW-Druck p1, in dem gilt P2 = P1 -Δp2, Dadurch hängt P2 auch von P0 ab.

Durch die vorab eingestellten Differenzdruckregelventile kann der Förderdruck in P1 und P2 je nach Einstellung des Steuersystems der Tunnelbohrmaschine geändert werden. Dadurch wird ein geschlossenes Drucksteuersystem durch Druckrückführung bereitgestellt; das durch Verknüpfen des Drucks p0 der Abbaukammer, des Drucks p1 der HBW-Fettverlustschmierung in der HWB-Kammer und der Druck p2 der EP2-Fettschmierung der EP2-Kammer ein relative Druckeinstellung in der Dichtung bildet. Die Dichtungsfähigkeit dieses Systems endet bei 6 bar.

In einem Fall, in dem die Schildmaschine in großer Tiefe und mit hohem Wasserdruck betrieben wird, übersteigt der Wasser- und Bodendruck 6 bar, so dass die herkömmliche mehrlippige kombinierte Dichtung dem externen Wasserdruck nur schwer standhalten kann und Erdbrei/Bentonitsuspension/Bohrklein die Dichtung durchdringt und in den Hauptantrieb eindringt, was zum Stillstand der Schildmaschine und zur Verzögerung des Projekts führt.

CN207049619U und CN107401678A offenbaren ein vollständig mechanisch-pneumatisches Differenzdruckregelsystem für ein Dichtungssystem einer Hauptantriebswelle einer Tunnelbohrmaschine für die Kammern des Dichtungssystems hinter der HBW-Labyrinthdichtung und der EP2-Fettschmierkammer, mit der die dahinter liegenden Kammern des Dichtungssystems differenzdruckgeregelt mechanisch pneumatisch unter Druck gesetzt werden können. Vorgesehen ist eine Druckluftquelle 1, ein erster Druckraum 5, der mit der Ölkammer P2 zwischen der zweiten und der dritten Lippendichtung des Dichtungssystems verbunden ist, und ein erstes mechanisch pneumatisches Differenzdruckventil 3 zwischen der Druckluftquelle 1 und dem ersten Druckraum 5. Weiterhin ist vorgesehen ein drittes mechanisch pneumatisches Differenzdruckventil 8, das zwischen der Druckluftquelle 1 und einem dritten Druckraum 12 angeordnet ist, wobei der dritte Druckraum 12 eine Kammer zwischen der entgegengesetzt angeordneten vierten Lippendichtung und dem hier luftdicht vorgesehenen Getriebekammer ist. Weiterhin ist das dritte mechanisch pneumatische Differenzdruckventil 8 parallel zur Verbindung mit dem dritten Druckraum 12 sowohl mit einem Druckablassventil 7 als auch mit einem zweiten mechanisch pneumatischen Differenzdruckventil 2 verbunden. Das zweite mechanisch pneumatische Differenzdruckventil 2 ist gegenüberliegend zur Verbindung mit dem dritten mechanisch pneumatischen Differenzdruckventil 8 mit einem zweiten Druckraum 11 verbunden, der die Leckagekammer P3 zwischen der dritten und vierten Lippendichtung ist. Das Druckablassventil 7 ist gegenüberliegend zum Anschluss mit dem dritten Differenzdruckventil 8 mit einem Schalldämpfer 4 als pneumatischer Ablass verbunden. Zur Druckregelung sind zwischen den Druckräumen 5, 11, 12 und den mechanisch pneumatischen Differenzdruckventilen 3, 8 und 2 jeweils eine Ablassdrossel 9 vorgesehen, die kontinuierlich Druckluft abgeben. Die mechanisch pneumatischen Differenzdruckventile 3, 8 und 2 und das Druckablassventil 7 sind jeweils mit einem Druckdifferenzwert Δp mechanisch einstellbar, der für jedes Ventil 2, 3, 7, 8 unterschiedlich ist bzw. sein kann. Das Druckablassventil 7 dient als Überdruckablass für den dritten Druckraum 12/P4 und ggf. auch für den zweiten Druckraum 11/P3. Weiterhin ist ein vierter Druckraum 13 vorgesehen, der die Druckluftblase 16 des Schneidrads 14 der Tunnelbohrmaschine darstellt und mit dem Abbauraum 15 hinter dem Schneidrad 14 in Verbindung steht. Der Druck 22 der Flüssigkeit oder des Erdbreis wirkt auf die Druckluftblase im vierten Druckraum. Der vierte Druckraum dient damit als Referenzdruck für die Regelung des Dichtungssystems.

Das erste Differenzdruckventil 3 ist an seinem + Anschluss mit dem vierten Druckraum 13/16 und an seinem - Anschluss mit dem ersten Druckraum 5/P2 pneumatisch verbunden. Das zweite Differenzdruckventil 2 ist an seinem + Anschluss mit dem ersten Druckraum 5/P2 und an seinem - Anschluss mit dem zweiten Druckraum 11/P3 pneumatisch verbunden. Das dritte Differenzdruckventil 8 ist an seinem + Anschluss mit dem zweiten Druckraum 11/P3 und an seinem - Anschluss mit dem dritten Druckraum 12/P4 pneumatisch verbunden. Das Druckablassventil 7 ist an seinem + Anschluss mit dem zweiten Druckraum 11/P3 und an seinem - Anschluss mit dem dritten Druckraum 12/P4 pneumatisch verbunden. Die Δp vom dritten Differenzdruckventil 8 und vom Druckablassventil 7 sind allerdings unterschiedlich.

Durch die mechanische Einstellung der Druckdifferenzwerte des ersten Differenzdruckventils 3, des zweiten Differenzdruckventils 2, des dritten Differenzdruckventils 8 und des Druckablassventils 7 wird bei einer Druckänderung im vierten Referenzdruckbehälter 13/16 der entsprechende Druck im jeweiligen Druckraum durch das jeweilige Differenzdruckventil und die Drossel 9 geregelt. Das Durchflussventil ist dynamisch ausgeglichen, um sicherzustellen, dass der Druck jedes Druckraums entsprechend der Druckdifferenzwerte zur Beibehaltung der Druckdifferenzen in den Druckräumen eingeregelt und aufrechterhalten werden kann. Das Druckablassventil kann im Falle eines Systemüberdrucks einen dynamischen Schutz bieten, um die Stabilität des Systems zu erhalten.

EP3854990 offenbart einen Lösungsansatz für ein Hauptantriebsdichtungssystem für eine Tunnelbohrmaschine, das eine mechanisch pneumatische Rückkopplungs- und Folgeregelung aufweist. Die Tunnelbohrmaschine weist ein Schneidrad auf. Der Raum hinter dem Schneidrad ist fluidisch mit einer Druckluftblase in eine Druckluftkammer ACB verbunden. Das Hauptantriebsdichtungssystem umfasst eine HBW-Labyrinthdichtung P0, eine Fettkammer P1, eine Öl- und Druckluftdichtungskammer P2, eine Leckageerkennungskammer P3 und eine Getriebekammer P4. Die Kammern P1, P2, P3 und P4 sind durch Lippendichtungen voneinander getrennt. Die Kammern P2, P3, P4 können durch Einbringen von Druckluft über Druckluftleitungen unter Druck gesetzt werden. Dafür ist einen Drucklufteingangsanschluss vorgesehen. Um eine Druckregelung zu erreichen sind in den Druckluftleitungen mechanisch pneumatische Differenzdruckregelventile 21, 22, 23 vorgesehen. Weiterhin ist eine Abluftleitung vorgesehen. Die Abluftleitung ist über mechanisch pneumatische Differenzdruckregelventile 51, 52, 53 mit den Kammern P2, P3, P4 verbunden, um geregelt Druck aus den Kammern abzulassen.

Wenn die Druckdifferenz zwischen dem Druckluftkammer ACB und der Öl- und Druckluftdichtungskammer P2 größer oder gleich einem ersten voreingestellten Wert ist, wird das erste positive pneumatische Differenzdruckregelventil 21 geöffnet, und das erste negative pneumatische Differenzdruckregelventil 51 befindet sich in einem geschlossenen Zustand ("in einem geschlossenen Zustand" bedeutet, dass das Ventilelement zu diesem Zeitpunkt geschlossen ist oder im Voraus geschlossen wurde, dasselbe gilt im Folgenden); und wenn die Druckdifferenz zwischen der Druckluftkammer und der Öl- und Druckluftdichtungskammer P2 kleiner oder gleich einem zweiten voreingestellten Wert ist, wird das erste negative pneumatische Differenzdruckregelventil 51 geöffnet, und das erste positive pneumatische Differenzdruckregelventil 21 befindet sich in einem geschlossenen Zustand.

Der "erste voreingestellte Wert" wird entsprechend dem im ersten positiven pneumatischen Differenzdruckregelventil 21 voreingestellten minimalen Öffnungswert (d.h. das erste positive pneumatische Differenzdruckregelventil 21 wird geöffnet und freigegeben, wenn die Druckdifferenz diesen Wert erreicht oder überschreitet) und dem im ersten negativen pneumatischen Differenzdruckregelventil 51 voreingestellten minimalen Schließwert (d.h. das erste negative pneumatische Differenzdruckregelventil 51 wird geschlossen und verschlossen, wenn die Druckdifferenz diesen Wert erreicht oder überschreitet) eingestellt. Vorzugsweise entspricht der erste voreingestellte Wert dem minimalen Öffnungswert des ersten positiven pneumatischen Differenzdruckregelventils 21 und ist größer als oder gleich dem minimalen Schließwert des ersten negativen pneumatischen Differenzdruckregelventils 51.

Der "zweite voreingestellte Wert" wird entsprechend dem im ersten positiven pneumatischen Differenzdruckregelventil 21 voreingestellten maximalen Schließwert (d.h. das erste positive pneumatische Differenzdruckregelventil 21 wird geschlossen und abgesperrt, wenn die Druckdifferenz diesen Wert erreicht oder unterschreitet) und dem im ersten negativen pneumatischen Differenzdruckregelventil 51 voreingestellten maximalen Öffnungswert (d.h. das erste negative pneumatische Differenzdruckregelventil 51 wird geöffnet und entsperrt, wenn die Druckdifferenz diesen Wert erreicht oder unterschreitet) eingestellt. Vorzugsweise entspricht der zweite voreingestellte Wert dem maximalen Öffnungswert des ersten negativen pneumatischen Differenzdruckregelventil 51 und ist kleiner oder gleich dem maximalen Schließwert des ersten positiven pneumatischen Differenzdruckregelventil 21.

Deshalb, wenn die Druckdifferenz zwischen der Druckluftkammer ACB und der Öl- und Druckluftdichtungskammer P2 auf den ersten voreingestellten Wert ansteigt oder diesen überschreitet, wird das erste positive pneumatische Differenzdruckregelventil 21 geöffnet, und das erste negative pneumatische Differenzdruckregelventil 51 befindet sich in einem geschlossenen Zustand, und Druckluft wird in die Öl- und Druckluftdichtungskammer P2 (d.h. den Öl- und Druckluftdichtungsbehälter 11) geladen, nachdem sie durch den Drucklufteingangsanschluss und das erste positive pneumatische Differenzdruckregelventil 21 gelangt ist. Die Öl- und Druckluftdichtungskammer P2 wird kontinuierlich gefüllt, bis der Gesamtdruck der Öl- und Druckluftdichtungskammer P2 und der Fettkammer P1 den externen Wasser- und Bodendruck ausgleichen kann, so dass die Hauptantriebsdichtung zuverlässig hält, und vorzugsweise erreicht zu diesem Zeitpunkt die Druckdifferenz zwischen der Druckluftkammer ACB und der Öl- und Druckluftdichtungskammer P2 einen Zwischenwert (der kleiner als der erste voreingestellte Wert und kleiner oder gleich dem Nenndruck der Fettkammer P1 ist), der in dem ersten positiven pneumatischen Differenzdruckregelventil 21 voreingestellt ist, oder ist kleiner als dieser, und das erste positive pneumatische Differenzdruckregelventil 21 geschlossen wird (oder, in anderen spezifischen Ausführungsformen, das erste positive pneumatische Differenzdruckregelventil 21 noch in einem offenen Zustand sein kann, in dem die Förderkapazität des ersten positiven pneumatischen Differenzdruckregelventils klein ist, um die Leckage auszugleichen). Wenn der Druck in der Druckluftkammer ACB abnimmt, dann, wenn die Druckdifferenz zwischen der Druckluftkammer ACB und der Öl- und Druckluftdichtungskammer P2 kleiner oder gleich dem zweiten voreingestellten Wert ist, wird das erste negative pneumatische Differenzdruckregelventil 51 geöffnet und das erste positive pneumatische Differenzdruckregelventil 21 befindet sich in einem geschlossenen Zustand, und zu diesem Zeitpunkt wird die Druckluft in der Öl- und Druckluftdichtungskammer P2 durch das erste negative pneumatische Differenzdruckregelventil 51 abgelassen; und die Druckluft in der Öl- und Druckluftdichtungskammer P2 wird kontinuierlich abgelassen, bis die Druckdifferenz zwischen der Druckluftkammer ACB und der Öl- und Druckluftdichtungskammer P2 einen Zwischenwert (der größer ist als der zweite voreingestellte Wert) erreicht, der im ersten negativen pneumatischen Differenzdruckregelventil 51 eingestellt ist, und das erste negative pneumatische Differenzdruckregelventil 51 wird geschlossen.

Weiterhin ist ein Druckluftweg des Hauptantriebsdichtungssystems offenbart, der die Öl- und Druckluftdichtungskammer P2, ein Getriebe P4, ein zweites positives pneumatisches Differenzdruckregelventil 22 und ein zweites negatives pneumatisches Differenzdruckregelventil 52 umfasst. Wenn die Druckdifferenz zwischen der Öl- und Druckluftdichtungskammer P2 und dem Getriebe P4 größer oder gleich einem dritten voreingestellten Wert ist, wird das zweite positive pneumatische Differenzdruckregelventil 22 geöffnet und das zweite negative pneumatische Differenzdruckregelventil 52 befindet sich in einem geschlossenen Zustand; und wenn die Druckdifferenz zwischen der Öl- und Druckluftdichtungskammer P2 und dem Getriebe P4 kleiner oder gleich einem vierten voreingestellten Wert ist, wird das zweite negative pneumatische Differenzdruckregelventil 52 geöffnet und das zweite positive pneumatische Differenzdruckregelventil 22 befindet sich in einem geschlossenen Zustand.

Der "dritte voreingestellte Wert" wird entsprechend dem im zweiten positiven pneumatischen Differenzdruckregelventil 22 voreingestellten minimalen Öffnungswert (d.h. das zweite positive pneumatische Differenzdruckregelventil 22 wird geöffnet und freigegeben, wenn die Druckdifferenz diesen Wert erreicht oder überschreitet) und dem im zweiten negativen pneumatischen Differenzdruckregelventil 52 voreingestellten minimalen Schließwert (d.h. das zweite negative pneumatische Differenzdruckregelventil 52 wird geschlossen und verschlossen, wenn die Druckdifferenz diesen Wert erreicht oder überschreitet) eingestellt. Vorzugsweise entspricht der dritte voreingestellte Wert dem minimalen Öffnungswert des zweiten positiven pneumatischen Differenzdruckregelventil 22 und ist größer als oder gleich dem minimalen Schließwert des zweiten negativen pneumatischen Differenzdruckregelventil 52.

Der "vierte voreingestellte Wert" wird entsprechend dem im zweiten positiven pneumatischen Differenzdruckregelventil 22 voreingestellten maximalen Schließwert (d.h. das zweite positive pneumatische Regelventil 22 wird geschlossen und abgesperrt, wenn die Druckdifferenz diesen Wert erreicht oder unterschreitet) und dem im zweiten negativen pneumatischen Differenzdruckregelventil 52 voreingestellten maximalen Öffnungswert (d.h. das zweite negative pneumatische Differenzdruckregelventil 52 wird geöffnet und entsperrt, wenn die Druckdifferenz diesen Wert erreicht oder unterschreitet) eingestellt. Vorzugsweise entspricht der vierte voreingestellte Wert dem maximalen Öffnungswert des zweiten negativen pneumatischen Differenzdruckregelventil 52 und ist kleiner als oder gleich dem maximalen Schließwert des zweiten positiven pneumatischen Differenzdruckregelventil 22.

Um ein Auslaufen des Getriebeöls im Getriebe aufgrund von Überdruck zu verhindern, wenn die Druckdifferenz zwischen der Öl- und Druckluftdichtungskammer P2 und dem Getriebe P4 größer als der dritte voreingestellte Wert ist, wird das zweite positive pneumatische Differenzdruckregelventil 22 geöffnet und das zweite negative pneumatische Differenzdruckregelventil 52 befindet sich in einem geschlossenen Zustand, und die Druckluft wird in das Getriebe P4 geladen, nachdem sie durch den Drucklufteingang und das zweite positive pneumatische Differenzdruckregelventil 22 gelangt ist, um das Getriebe zu laden. Das Getriebe P4 wird kontinuierlich aufgeladen, bis die Druckdifferenz zwischen der Öl- und Druckluftdichtungskammer P2 und dem Getriebe P4 einen Zwischenwert (der kleiner als der dritte voreingestellte Wert ist) erreicht oder unterschreitet, der im zweiten positiven pneumatischen Differenzdruckregelventil 22 voreingestellt ist, und zu diesem Zeitpunkt wird das zweite positive pneumatische Differenzdruckregelventil 22 geschlossen (oder, in anderen spezifischen Ausführungsformen, kann das zweite positive pneumatische Differenzdruckregelventil 22 noch in einem offenen Zustand sein, in dem die Förderkapazität des zweiten positiven pneumatischen Regelventils klein ist, um Leckagen auszugleichen). Wenn der Druck in der Druckluftkammer ACB sinkt, sinkt auch der Druck in der Öl- und Druckluftdichtungskammer P2, und wenn die Druckdifferenz zwischen der Öl- und Druckluftdichtungskammer P2 und dem Getriebe P4 kleiner oder gleich dem vierten voreingestellten Wert ist, wird das zweite negative pneumatische Differenzdruckregelventil 52 geöffnet und das zweite positive pneumatische Differenzdruckregelventil 22 befindet sich in einem geschlossenen Zustand, und zu diesem Zeitpunkt wird die Druckluft im Getriebe P4 durch das zweite negative pneumatische Differenzdruckregelventil 52 abgelassen. Die Druckluft im Getriebe P4 wird kontinuierlich abgelassen, bis die Druckdifferenz zwischen der Öl- und Druckluftdichtungskammer P2 und dem Getriebe P4 einen Zwischenwert (der größer ist als der vierte voreingestellte Wert) erreicht, der im zweiten negativen pneumatischen Differenzdruckregelventil 52 eingestellt ist, und das zweite negative pneumatische Differenzdruckregelventil 52 wird geschlossen.

Weiterhin ist ein Druckluftweg des Hauptantriebsdichtungssystems offenbart, der das Getriebe P4, eine Leckageerkennungskammer P3, ein drittes positives pneumatisches Differenzdruckregelventil 23 und ein drittes negatives pneumatisches Differenzdruckregelventil 53 umfasst. Wenn die Druckdifferenz zwischen dem Getriebe P4 und der Leckerkennungskammer P3 größer oder gleich einem fünften voreingestellten Wert ist, wird das dritte positive pneumatische Differenzdruckregelventil 23 geöffnet und das dritte negative pneumatische Differenzdruckregelventil 53 befindet sich in einem geschlossenen Zustand; und wenn die Druckdifferenz zwischen dem Getriebe P4 und der Leckerkennungskammer P3 kleiner oder gleich einem sechsten voreingestellten Wert ist, wird das dritte negative pneumatische Regelventil 53 geöffnet und das dritte positive pneumatische Regelventil 23 befindet sich in einem geschlossenen Zustand.

Der "fünfte voreingestellte Wert " wird entsprechend dem im dritten positiven pneumatischen Differenzdruckregelventil 23 voreingestellten minimalen Öffnungswert (d.h. das dritte positive pneumatische Differenzdruckregelventil 23 wird geöffnet und freigegeben, wenn die Druckdifferenz diesen Wert erreicht oder überschreitet) und dem im dritten negativen pneumatischen Differenzdruckregelventil 53 voreingestellten minimalen Schließwert (d.h. das dritte negative pneumatische Differenzdruckregelventil 53 wird geschlossen und verschlossen, wenn die Druckdifferenz diesen Wert erreicht oder überschreitet) eingestellt. Vorzugsweise entspricht der fünfte voreingestellte Wert dem minimalen Öffnungswert des dritten positiven pneumatischen Differenzdruckregelventil 23 und ist größer als oder gleich dem minimalen Schließwert des dritten negativen pneumatischen Differenzdruckregelventil 53.

Der "sechste voreingestellte Wert" wird entsprechend dem im dritten positiven pneumatischen Differenzdruckregelventil 23 voreingestellten maximalen Schließwert (d.h. das dritte positive pneumatische Differenzdruckregelventil 23 wird geschlossen und abgesperrt, wenn die Druckdifferenz diesen Wert erreicht oder unterschreitet) und dem im dritten negativen pneumatischen Regelventil 53 voreingestellten maximalen Öffnungswert (d.h. das dritte negative pneumatische Regelventil 53 wird geöffnet und entsperrt, wenn die Druckdifferenz diesen Wert erreicht oder unterschreitet) eingestellt. Vorzugsweise entspricht der sechste voreingestellte Wert dem maximalen Öffnungswert des dritten negativen pneumatischen Differenzdruckregelventil 53 und ist kleiner oder gleich dem maximalen Schließwert des dritten positiven pneumatischen Differenzdruckregelventil 23.

Wenn die Druckdifferenz zwischen dem Getriebe P4 und der Leckageerkennungskammer P3 größer oder gleich dem fünften voreingestellten Wert ist, wird das dritte positive pneumatische Differenzdruckregelventil 23 geöffnet, und das dritte negative pneumatische Differenzdruckregelventil 53 befindet sich in einem geschlossenen Zustand, und die Druckluft wird in die Leckageerkennungskammer P3 geladen, nachdem sie durch den Drucklufteingangsanschluss, das zweite positive pneumatische Differenzdruckregelventil 22 und das dritte positive pneumatische Differenzdruckregelventil 23 gelangt ist. Die Leckageerkennungskammer P3 wird kontinuierlich beaufschlagt, bis der Gesamtdruck der Leckageerkennungskammer P3, der Öl- und Druckluftdichtungskammer P2 und der EP2-Fettkammer P1 den äußeren Wasser- und Bodendruck ausgleichen kann, so dass die Hauptantriebsdichtung zuverlässig ist, und zwar vorzugsweise zu diesem Zeitpunkt, die Druckdifferenz zwischen dem Getriebe P4 und der Leckerkennungskammer P3 einen Zwischenwert (der kleiner als der fünfte voreingestellte Wert ist) erreicht oder kleiner als dieser ist, der in dem dritten positiven pneumatischen Differenzdruckregelventil 23 voreingestellt ist, und das dritte positive pneumatische Differenzdruckregelventil 23 geschlossen ist (oder, in anderen spezifischen Ausführungsformen, das dritte positive pneumatische Regelventil 23 noch in einem offenen Zustand sein kann, in dem die Förderkapazität des dritten positiven pneumatischen Differenzdruckregelventil klein ist, um die Leckage auszugleichen. Wenn der Druck in der Druckluftkammer ACB sinkt, sinkt auch der Druck in der Leckageerkennungskammer P3, und wenn die Druckdifferenz zwischen dem Getriebe P4 und der Leckageerkennungskammer P3 kleiner oder gleich dem sechsten voreingestellten Wert ist, wird das dritte negative pneumatische Differenzdruckregelventil 53 geöffnet, und das dritte positive pneumatische Differenzdruckregelventil 23 befindet sich in einem geschlossenen Zustand, zu diesem Zeitpunkt wird die Druckluft in der Leckageerkennungskammer P3 durch das dritte pneumatische Differenzdruckregelventil 53 abgelassen. Die Druckluft in der Leckageerkennungskammer P3 wird kontinuierlich abgelassen, bis die Druckdifferenz zwischen dem Getriebe P4 und der Leckageerkennungskammer P3 einen Zwischenwert (der größer als der sechste voreingestellte Wert ist) erreicht, der im dritten negativen pneumatischen Differenzdruckregelventil 53 eingestellt ist, und das dritte negative pneumatische Differenzdruckregelventil 53 wird geschlossen.

### AUFGABE

Die zuvor beschriebenen Systeme der mechanisch pneumatischen Differenzdruckregelung sind sehr komplex in der Installation, Einstellung und Reparatur. Es besteht ein sehrt hohes Risiko, bei der Montage Fehler zu machen, die dann zu aufwendig zu reparierenden Schäden führen können. Weiterhin sind die Systeme komplex in der Anpassung an Dichtungsverschließ und sich ändernden Parametern. Weiterhin weisen die Dichtungssystem Probleme im Bereich der hinteren Dichtungskammern auf, wenn in diese systembedingt ohne Druckbeaufschlagung sind. Hier kann es leicht zu Fehlfunktionen der Dichtungen führen, die dann zu Ölverlusten von einer Kammer in die benachbarte Kammer führen können.

Die Aufgabe der Erfindung liegt drin ein Hauptantriebsdichtungssystem für eine Tunnelbohrmaschine bereitzustellen, die die vorgenannten Nachteile überwindet.

### BESCHREIBUNG DER ERFINDUNG

Diese Aufgabe wird erfindungsgemäß dadurch gelöst, dass wenigstens eine elektronische Steuerung vorgesehen ist, die wenigstens eine Datenspeichereinheit, wenigstens eine Datenverarbeitungseinheit und wenigstens eine Steuerbefehlausgabeeinheit aufweist, dass wenigstens ein auf der wenigstens einen elektronischen Steuerung basierter Regelkreis zur Regelung des zweiten Drucks in der wenigstens einen zweiten Kammer vorgesehen ist, dass wenigstens eine erste Druckerfassungsvorrichtung mit dem wenigstens einen Raum oder der wenigstens einen ersten Kammer verbunden ist, um den Druck in dem Raum oder den aktuellen Druck in der wenigstens einen ersten Kammer zu messen, wobei die wenigstens eine erste Druckerfassungsvorrichtung mit der wenigstens einen elektronischen Steuerung zur Übermittlung des Drucks elektronisch verbunden ist, dass wenigstens eine zweite Druckerfassungsvorrichtung mit der wenigstens einen zweiten Kammer verbunden ist, um den aktuellen Druck in der wenigstens einen zweiten Kammer zu messen, wobei die wenigstens eine zweite Druckerfassungsvorrichtung mit der wenigstens einen elektronischen Steuerung zur Übermittlung des Drucks elektronisch verbunden ist, dass das wenigstens eine erste Druckluftschaltventil der wenigstens einen zweiten Kammer mit der wenigstens einen Steuereinrichtung verbunden ist, so dass das wenigstens eine erste Druckluftschaltventil der wenigstens einen zweiten Kammer von der Steuereinrichtung elektrisch schaltbar ist, dass das wenigstens ein zweite Druckluftschaltventil der wenigstens einen zweiten Kammer mit der mindestens einen Steuereinrichtung verbunden ist, so dass das wenigstens eine zweite Druckluftschaltventil der wenigstens einen zweiten Kammer von der Steuereinrichtung elektrisch schaltbar ist, und dass die elektronische Steuerung ein Steuerprogramm aufweist mit den folgenden Schritten:
Empfangen und Speichern des Drucks p0 und/oder des Druck p1-IST,
Festlegen und Speichern des Differenzdrucks ΔpL1-STEUERUNG, wobei bevorzugt ein Prüfungsschritt vorgesehen ist, dass der ΔpL1-STEUERUNG kleiner als oder gleich groß wie die Druckdifferenz ΔpL1 ist;
Festlegen und Speichern eines Druckaufschlags Δp1 und Berechnen eines Drucks p1-SOLL nach der Formel p1-SOLL= p0+ Δp1, wobei bevorzugt ein Prüfungsschritt vorgesehen ist, dass p1-SOLL größer als p0 ist,
Festlegen eines Referenzdruckes pREF, wobei pREF einer der folgenden Drücke ist: p0+ Δp1 oder p1-IST,
Speicher der Drucks p2-IST,
Berechnen eines Drucks p2-SOLL nach der Formel p2-SOLL = pREF - ΔpL1-STEUERUNG, wobei ein Prüfungsschritt vorgesehen ist, dass p2-SOLL in einem Bereich zwischen pREF und pREF- ΔpL1 liegt,
Empfangen und Speichern der Drucks p2-IST der zweiten Kammer,
Berechnen und Speichern einer Druckdifferenz Δp2 zwischen p2-SOLL und p2-IST, und
Prüfen, ob Δp2 in einem Bereich x<0<y liegt, wobei x, y eine untere Intervallgrenze und eine obere Intervallgrenze sind,
wobei, wenn Δp2 in dem Bereich x<0< y liegt, das erste Druckluftschaltventil der wenigstens einen zweiten Kammer und das zweite Druckluftschaltventil der wenigstens einen zweiten Kammer so von der Steuerung so angesteuert sind, dass das erste Druckluftschaltventil und das zweite Druckluftschaltventil geschlossen sind,
wobei, wenn Δp2 > y ist, die Steuerbefehlausgabeeinheit ein Signal zum Öffnen des ersten Druckluftschaltventils der wenigstens einen zweiten Kammer an das erste Druckluftschaltventil der wenigstens einen zweiten Kammer sendet, wobei das zweite Druckluftschaltventil der wenigstens einen zweiten Kammer so angesteuert ist, dass es geschlossen ist, und
wobei, wenn Δp2 < x ist, die Steuerbefehlausgabeeinheit ein Signal zum Öffnen des zweiten Druckluftschaltventils der wenigstens einen zweiten Kammer an das zweite Druckluftschaltventil der wenigstens einen zweiten Kammer sendet, wobei das erste Druckluftschaltventil der wenigstens einen zweiten Kammer so angesteuert ist, dass es geschlossen ist.

Vorteilhaft dabei ist, dass das erfindungsgemäße System trotz des Vorbehaltes der Fachwelt, dass nur mechanisch pneumatische Differenzdrucksysteme sicher sind, das System kostengünstig und platzsparend zu installieren ist sowie sich einfach und fehlerfrei montieren, einstellen, warten und anpassen lässt auch durch ein entsprechendes einfaches Anpassen im Steuerprogramm.

Eine weitere Lösung der Erfindung sieht vor, dass wenigstens eine weitere zweite Kammer mit einem weiteren zweiten Druck im Anschluss an die wenigstens eine zweite Kammer vorgesehen ist, wobei es sich bei der wenigstens einen weiteren zweiten Kammer um eine Öl- und Druckluftdichtungskammer handelt, dass wenigstens eine Dichtung zwischen der wenigstens einen zweiten Kammer und der wenigstens eine weiteren zweiten Kammer vorgesehen ist, die einem Differenzdruck ΔpL2` zwischen der wenigstens einen zweiten Kammer und der wenigstens einen weiteren zweiten Kammer widerstehen kann, dass wenigstens ein erstes Druckluftschaltventil der wenigstens einen weiteren zweiten Kammer mit wenigstens einem Drucklufteinlass und wenigstens einem Druckluftauslass vorgesehen ist, wobei das erstes Druckluftschaltventil der wenigstens einen weiteren zweiten Kammer so eingerichtet ist, dass es zwischen einer offenen und einer geschlossenen Stellung schaltbar ist, dass wenigstens ein zweites Druckluftschaltventil der wenigstens einen weiteren zweiten Kammer mit wenigstens einem Drucklufteinlass und wenigstens einem Druckluftauslass vorgesehen ist, wobei das zweites Druckluftschaltventil der wenigstens einen weiteren zweiten Kammer so eingerichtet ist, dass es zwischen einer offenen und einer geschlossenen Stellung schaltbar ist, dass wenigstens ein auf der wenigstens einen elektronischen Steuerung basierter Regelkreis zur Regelung des weiteren zweiten Drucks in der wenigstens einen weiteren zweiten Kammer vorgesehen ist, dass wenigstens eine weitere zweite Druckerfassungsvorrichtung mit der wenigstens einen weiteren zweiten Kammer verbunden ist, um den aktuellen Druck in der wenigstens einen zweiten Kammer zu messen, wobei die wenigstens eine weitere zweite Druckerfassungsvorrichtung mit der wenigstens einen elektronischen Steuerung zur Übermittlung des Drucks elektronisch verbunden ist, dass das wenigstens eine erste Druckluftschaltventil der wenigstens einen weiteren zweiten Kammer mit der wenigstens einen Steuereinrichtung verbunden ist, so dass das wenigstens eine erste Druckluftschaltventil der wenigstens einen weiteren zweiten Kammer von der Steuereinrichtung elektrisch schaltbar ist, dass das wenigstens ein zweite Druckluftschaltventil der wenigstens einen weiteren zweiten Kammer mit der mindestens einen Steuereinrichtung verbunden ist, so dass das wenigstens eine zweite Druckluftschaltventil der wenigstens einen weiteren zweiten Kammer von der Steuereinrichtung elektrisch schaltbar ist, dass der wenigstens einen Auslass des Drucklufteingangsanschlusses, der pneumatisch über eine Druckluftleitung mit den wenigstens einen Drucklufteinlass des ersten Druckluftschaltventil der wenigstens einen weiteren zweiten Kammer verbunden ist, wobei der wenigstens eine Druckluftauslass des ersten Druckluftschaltventils der wenigstens einen weiteren zweiten Kammer mit dem wenigstens einen Drucklufteinlass des zweiten Druckluftschaltventils der wenigstens einen weiteren zweiten Kammer und der wenigstens einen weiteren zweiten Kammer pneumatisch verbunden ist, und wobei ein Druckluftauslass des zweiten Druckluftschaltventils der wenigstens einen weiteren zweiten Kammer mit der Druckluftablassleitung pneumatisch verbunden ist, und dass das Steuerprogramm der elektronischen Steuerung die weiteren folgenden Schritte aufweist:
Festlegen und Speichern des Differenzdrucks ΔpL2'-STEUERUNG, wobei ein Prüfungsschritt vorgesehen ist, dass der ApL2'-STEUERUNG kleiner als oder gleich groß wie die Druckdifferenz ΔpL2` ist;
Empfangen und Speichern der Drucks p2'-IST der weiteren zweiten Kammer,
Berechnen und Speichern eines Drucks p2`-SOLL nach der Formel p2`-SOLL = p2-IST - ΔpL2`-STEUERUNG oder nach der Formel p2'-SOLL = pREF - ΔpL1-STEUERUNG - ΔpL2`-STEUERUNG, wobei ein Prüfungsschritt vorgesehen ist, dass p2'-SOLL in einem Bereich zwischen p2-IST und p2-IST - ΔpL2` liegt,
Berechnen und Speichern einer Druckdifferenz Δp2` zwischen p2'-SOLL und p2'-IST, und
Prüfen, ob Δp2'in einem Bereich x<0<y liegt, wobei x, y eine untere Intervallgrenze und eine obere Intervallgrenze sind,
wobei, wenn Δp2' in dem Bereich x<0<y liegt, das erste Druckluftschaltventil der wenigstens einen weiteren zweiten Kammer und das zweite Druckluftschaltventil der wenigstens einen weiteren zweiten Kammer so angesteuert sind, dass sie geschlossen sind,
wobei, wenn Δp2` > y ist, die Steuerbefehlausgabeeinheit ein Signal zum Öffnen des ersten Druckluftschaltventils der wenigstens einen weiteren zweiten Kammer an das erste Druckluftschaltventil der wenigstens einen weiteren zweiten Kammer sendet, wobei das zweite Druckluftschaltventil der wenigstens einen weiteren zweiten Kammer so angesteuert ist, dass es geschlossen ist, und
wobei, wenn Δp2` < x ist, die Steuerbefehlausgabeeinheit ein Signal zum Öffnen des zweiten Druckluftschaltventils der wenigstens einen weiteren zweiten Kammer an das zweite Druckluftschaltventil der wenigstens einen weiteren zweiten Kammer sendet, wobei das erste Druckluftschaltventil der wenigstens einen weiteren zweiten Kammer so angesteuert ist, dass es geschlossen ist.

Durch das Vorsehen der weiteren zweiten Kammer die ebenfalls als eine Öl- und Druckluftdichtungskammer ausgeführt ist, hat den Vorteil, dass eine zusätzlich Dichtstufe im Vergleich zu bisherigen Systemen mit EP2 Fettschmierkammer bereitgestellt wird, die ebenfalls relevant für den Druckabtrag ist.

Eine weitere Lösung der Erfindung sieht vor, dass wenigstens eine dritte Kammer mit einem dritten Druck im Anschluss an die wenigstens eine zweite Kammer oder der an die wenigstens eine weitere zweite Kammer vorgesehen ist, wobei es sich bei der wenigstens einen dritten Kammer um eine Leckageerkennungskammer handelt, dass wenigstens eine Dichtung zwischen der wenigstens einen zweiten Kammer oder der wenigstens einen weiteren zweiten Kammer und der wenigstens einen dritten Kammer vorgesehen ist, die einem Differenzdruck ΔpL2 zwischen der wenigstens einen zweiten Kammer oder der wenigstens einen weiteren zweiten Kammer und der der wenigstens einen dritten Kammer widerstehen kann, dass wenigstens ein erstes Druckluftschaltventil der wenigstens einen dritten Kammer mit wenigstens einem Drucklufteinlass und wenigstens einem Druckluftauslass vorgesehen ist, wobei das erstes Druckluftschaltventil der wenigstens einen dritten Kammer so eingerichtet ist, dass es zwischen einer offenen und einer geschlossenen Stellung schaltbar ist, dass wenigstens ein zweites Druckluftschaltventil der wenigstens einen dritten Kammer mit wenigstens einem Drucklufteinlass und wenigstens einem Druckluftauslass vorgesehen ist, wobei das zweites Druckluftschaltventil der wenigstens einen dritten Kammer so eingerichtet ist, dass es zwischen einer offenen und einer geschlossenen Stellung schaltbar ist, dass wenigstens ein auf der wenigstens einen elektronischen Steuerung basierter Regelkreis zur Regelung des dritten Drucks in der wenigstens einen dritten Kammer vorgesehen ist, dass wenigstens eine dritte Druckerfassungsvorrichtung mit der wenigstens einen dritten Kammer verbunden ist, um den aktuellen Druck in der wenigstens einen dritten Kammer zu messen, wobei die wenigstens eine dritte Druckerfassungsvorrichtung mit der wenigstens einen elektronischen Steuerung zur Übermittlung des Drucks elektronisch verbunden ist, dass das wenigstens eine erste Druckluftschaltventil der wenigstens einen dritten Kammer mit der wenigstens einen Steuereinrichtung verbunden ist, so dass das wenigstens eine erste Druckluftschaltventil von der Steuereinrichtung elektrisch schaltbar ist, dass das wenigstens ein zweite Druckluftschaltventil der wenigstens einen dritten Kammer mit der mindestens einen Steuereinrichtung verbunden ist, so dass das wenigstens eine zweite der wenigstens einen dritten Kammer von der Steuereinrichtung elektrisch schaltbar ist,
dass der wenigstens einen Auslass des Drucklufteingangsanschlusses, der pneumatisch über eine Druckluftleitung mit den wenigstens einen Drucklufteinlass des ersten Druckluftschaltventil der wenigstens einen dritten Kammer verbunden ist, wobei der wenigstens eine Druckluftauslass des ersten Druckluftschaltventils der wenigstens einen dritten Kammer mit dem wenigstens einen Drucklufteinlass des zweiten Druckluftschaltventils der wenigstens einen dritten Kammer und der wenigstens einen dritten Kammer pneumatisch verbunden ist, und wobei ein Druckluftauslass des zweiten Druckluftschaltventils der wenigstens einen dritten Kammer mit der Druckluftablassleitung pneumatisch verbunden ist, und dass das Steuerprogramm der elektronischen Steuerung weiteren folgenden Schritte aufweist:
Festlegen und Speichern des Differenzdrucks ΔpL2-STEUERUNG, wobei ein Prüfungsschritt vorgesehen ist, dass der ΔpL2-STEUERUNG kleiner als oder gleich groß wie die Druckdifferenz ΔpL2 ist;
Empfangen und Speichern der Drucks p3-IST der dritten Kammer,
Berechnen und Speichern eines Drucks p3-SOLL nach der Formel p3-SOLL = (p2-IST oder p2'-IST) - (ΔpL2-STEUERUNG oder ΔpL2`-STEUERUNG) oder nach der Formel p3-SOLL = pREF - ΔpL1-STEUERUNG - ΔpL2`-STEUERUNG - ΔpL2-STEUERUNG, wobei jeweils ein Prüfungsschritt vorgesehen ist, dass p3-SOLL in einem Bereich zwischen p2-IST und p2-IST - ΔpL2 bzw. zwischen p2'-IST und p2'-IST - ΔpL2 liegt,
Berechnen und Speichern einer Druckdifferenz Δp3 zwischen p3-SOLL und p3-IST, und
Prüfen, ob Δp3 in einem Bereich x<0<y liegt, wobei x, y eine untere Intervallgrenze und eine obere Intervallgrenze sind,
wobei, wenn Δp3 in dem Bereich x<0<y liegt, das erste Druckluftschaltventil der wenigstens einen dritten Kammer und das zweite Druckluftschaltventil der wenigstens einen dritten Kammer so angesteuert sind, dass sie geschlossen sind,
wobei, wenn Δp3 > y ist, die Steuerbefehlausgabeeinheit ein Signal zum Öffnen des ersten Druckluftschaltventils der wenigstens einen dritten Kammer an das erste Druckluftschaltventil der wenigstens einen dritten Kammer sendet, wobei das zweite Druckluftschaltventil der wenigstens einen dritten Kammer so angesteuert ist, dass es geschlossen ist, und
wobei, wenn Δp3 < x ist, die Steuerbefehlausgabeeinheit ein Signal zum Öffnen des zweiten Druckluftschaltventils der wenigstens einen dritten Kammer an das zweite Druckluftschaltventil der wenigstens einen dritten Kammer sendet, wobei das erste Druckluftschaltventil der wenigstens einen dritten Kammer so angesteuert ist, dass es geschlossen ist.

Hierdurch wird eine einfache Regelung des Drucks in der Leckageerkennungskammer bereitgestellt.

Eine weitere Lösung der Erfindung sieht vor, dass wenigstens eine vierte Kammer mit einem vierten Druck im Anschluss an die wenigstens eine dritte Kammer vorgesehen ist, wobei es sich bei der wenigstens einen vierten Kammer um eine Getriebekammer handelt, dass wenigstens eine Dichtung zwischen der wenigstens einen dritten Kammer und der wenigstens einen vierten Kammer vorgesehen ist, die einem Differenzdruck ΔpL3 zwischen der wenigstens einen dritten Kammer und der der wenigstens einen vierten Kammer widerstehen kann, dass wenigstens ein erstes Druckluftschaltventil der wenigstens einen vierten Kammer mit wenigstens einem Drucklufteinlass und wenigstens einem Druckluftauslass vorgesehen ist, wobei das erstes Druckluftschaltventil der wenigstens einen vierten Kammer so eingerichtet ist, dass es zwischen einer offenen und einer geschlossenen Stellung schaltbar ist, dass wenigstens ein zweites Druckluftschaltventil der wenigstens einen vierten Kammer mit wenigstens einem Drucklufteinlass und wenigstens einem Druckluftauslass vorgesehen ist, wobei das zweites Druckluftschaltventil der wenigstens einen vierten Kammer so eingerichtet ist, dass es zwischen einer offenen und einer geschlossenen Stellung schaltbar ist, dass wenigstens ein auf der wenigstens einen elektronischen Steuerung basierter Regelkreis zur Regelung des vierten Drucks in der wenigstens einen vierten Kammer vorgesehen ist, dass wenigstens eine dritte Druckerfassungsvorrichtung mit der wenigstens einen vierten Kammer verbunden ist, um den aktuellen Druck in der wenigstens einen dritten Kammer zu messen, wobei die wenigstens eine vierte Druckerfassungsvorrichtung mit der wenigstens einen elektronischen Steuerung zur Übermittlung des Drucks elektronisch verbunden ist, dass das wenigstens eine erste Druckluftschaltventil der wenigstens einen vierten Kammer mit der wenigstens einen Steuereinrichtung verbunden ist, so dass das wenigstens eine erste Druckluftschaltventil der wenigstens einen vierten Kammer von der Steuereinrichtung elektrisch schaltbar ist, dass das wenigstens ein zweite Druckluftschaltventil der wenigstens einen vierten Kammer mit der mindestens einen Steuereinrichtung verbunden ist, so dass das wenigstens eine zweite Druckluftschaltventil der wenigstens einen vierten Kammer von der Steuereinrichtung elektrisch schaltbar ist, dass der wenigstens einen Auslass des Drucklufteingangsanschlusses, der pneumatisch über eine Druckluftleitung mit den wenigstens einen Drucklufteinlass des ersten Druckluftschaltventil der wenigstens einen vierten Kammer verbunden ist, wobei der wenigstens eine Druckluftauslass des ersten Druckluftschaltventils der wenigstens einen vierten Kammer mit dem wenigstens einen Drucklufteinlass des zweiten Druckluftschaltventils der wenigstens einen vierten Kammer und der wenigstens einen vierten Kammer pneumatisch verbunden ist, und wobei ein Druckluftauslass des zweiten Druckluftschaltventils der wenigstens einen vierten Kammer mit der Druckluftablassleitung pneumatisch verbunden ist, und dass das Steuerprogramm der elektronischen Steuerung die weiteren folgenden Schritte aufweist:
Festlegen und Speichern eines Druckaufschlags Δp4ZUSCHLAG,
Berechnen und Speichern eines Drucks p4-SOLL nach der Formel p4-SOLL = p3-IST+ Δp4ZUSCHLAG,
Festlegen und Speichern des Differenzdrucks ΔpL3-STEUERUNG, wobei ein Prüfungsschritt vorgesehen ist, dass der ΔpL3-STEUERUNG kleiner als oder gleich groß wie die Druckdifferenz ΔpL3 ist;
Empfangen und Speichern der Drucks p4-IST der vierten Kammer,
Berechnen und Speichern einer Druckdifferenz Δp4 zwischen p4-SOLL und p4-IST, und
Prüfen, ob Δp4 in einem Bereich x<0<y liegt, wobei x, y eine untere Intervallgrenze und eine obere Intervallgrenze sind,
wobei, wenn Δp4 in dem Bereich x<0<y liegt, das erste Druckluftschaltventil der wenigstens einen vierten Kammer und das zweite Druckluftschaltventil der wenigstens einen vierten Kammer so angesteuert sind, dass sie geschlossen sind,
wobei, wenn Δp4 > y ist, die Steuerbefehlausgabeeinheit ein Signal zum Öffnen des ersten Druckluftschaltventils der wenigstens einen vierten Kammer an das erste Druckluftschaltventil der wenigstens einen vierten Kammer sendet, wobei das zweite Druckluftschaltventil der wenigstens einen vierten Kammer so angesteuert ist, dass es geschlossen ist, und
wobei, wenn Δp4 < x ist, die Steuerbefehlausgabeeinheit ein Signal zum Öffnen des zweiten Druckluftschaltventils der wenigstens einen vierten Kammer an das zweite Druckluftschaltventil der wenigstens einen vierten Kammer sendet, wobei das erste Druckluftschaltventil der wenigstens einen vierten Kammer so angesteuert ist, dass es geschlossen ist.

Hierdurch wird eine einfache Regelung des Drucks in der Getriebekammer bereitgestellt.

Eine weitere Lösung der Erfindung sieht vor, dass der wenigstens eine Druckluftauslass des zweiten Druckluftschaltventils der wenigstens einen zweiten Kammer, der wenigstens einen weiteren zweiten Kammer, der wenigstens einen dritten Kammer und/oder der wenigstens einen vierten Kammer mit der Druckluftablassleitung pneumatisch verbunden ist, die bevorzugt über einen Schalldämpfer mit der Umgebung verbunden ist, und/oder mit einer Luftabsaugleitung pneumatisch verbunden ist, die mit einer Vakuumpumpe verbunden ist, wobei bevorzugt die Vakuumpumpe über die Steuerung steuerbar ist. Durch die beiden Varianten der Druckluftabgabe, entweder passiv oder aktive als Absaugung, ist es möglich den Druck in einer oder mehreren den Kammern gezielt und mit der gewünschten Genauigkeit abzulassen.

Eine weitere Lösung der Erfindung sieht vor, dass wenigstens eine der Kammern mit wenigstens einem dritten Druckluftschaltventil verbunden ist, das mit seinem Druckluftauslass mit einer Luftabsaugleitung pneumatisch verbunden ist, die mit einer Vakuumpumpe verbunden ist. so dass in der verbundenen Kammer ein Druck kleiner dem Atmosphärendruck einstellbar ist, wobei bevorzugt die Vakuumpumpe über die Steuerung steuerbar ist. Das dritte Druckluftschaltventil ermöglicht damit einen zweiten Weg, den Druck zu reduzieren. Durch die Vakuumpumpe erfolgt die Reduzierung kontrolliert. Es hat sich weiterhin überraschend gezeigt, dass es hierdurch möglich ist, in einer oder mehreren Kammern einen Druck bereitzustellen, der kleiner als der Atmosphärendruck ist. Es hat sich überraschend gezeigt, dass hierdurch die Dichtwirkung in den Kammern erhöht werden kann, indem die Dichtung an die abzudichtende Welle angesaugt werden.

Eine weitere Lösung der Erfindung sieht vor, dass in der Steuerung eine Reihe der Soll-Drücke der Kammern gespeichert ist: p0 < p1-SOLL > p2-SOLL ≥ p2'-SOLL ≥ p3-SOLL ≤ p4-SOLL, wobei die weitere zweite Kammer und ihr Druck entfallen können. Hierdurch wird ein Verlust von Schmiermittel vermieden, was den Betrieb erleichtert und kostengünstiger und umweltverträglicher macht.

Eine weitere Lösung der Erfindung sieht vor, dass, wenn in wenigstens einer der Kammern der Solldruck kleiner Atmosphärendruck berechnet wird, der Solldruck in der Steuerung auf Atmosphärendruck oder auf einen definierten Wert zwischen 0 bar und Atmosphärendruck festgesetzt wird, der dann über das Schalten des dritten Druckluftschaltventil der jeweiligen Kammer durch die Steuerung, die Luftabsaugleitung und die Vakuumpumpe einstellbar ist, wobei bevorzugt die Vakuumpumpe über die Steuerung steuerbar ist. Es hat sich überraschend gezeigt, dass es hierdurch möglich ist, in einer oder mehreren Kammern einen Druck bereitzustellen, der kleiner als der Atmosphärendruck ist. Es hat sich überraschend gezeigt, dass hierdurch die Dichtwirkung in den Kammern erhöht werden kann, indem die Dichtung an die abzudichtende Welle angesaugt werden.

Eine weitere Lösung der Erfindung sieht vor, dass, wenn p0 + Δp1 kleiner ΔpL1-STEUERUNG ist, die Solldrücke der Kammern in der Steuerung auf den Atmosphärendruck festgesetzt werden oder wenigstens einer der Solldrücke der Kammern in der Steuerung auf einen definierten Wert zwischen 0 bar und Atmosphärendruck festgesetzt wird, der dann über das Schalten des dritten Druckluftschaltventil der jeweiligen Kammer durch die Steuerung, die Luftabsaugleitung und die Vakuumpumpe einstellbar ist, wobei bevorzugt die Vakuumpumpe über die Steuerung steuerbar ist.

Eine weitere Lösung der Erfindung sieht vor, dass für wenigstens eine der Kammern eine Umwälzpumpe für das in der Kammer befindliche Öl vorgesehen ist, die über wenigstens eine Leitung fluidisch mit wenigstens einem Ansaugpunkt der Kammer zum Absaugen des Öls aus der Kammer und über wenigstens eine weitere Leitung fluidisch mit wenigstens einem Einbringpunkt der Kammer zum Einbringen des Öls in die Kammer verbunden ist. Vorteilhaft ist dabei, wenn das Öl vor oder hinter der Umwälzpumpe gefiltert wird, bzw. Fremdstoffe aus dem Öl abgeschieden werden und/oder die Qualität des Öls geprüft wird. Das Umwälzen des Öls in der jeweiligen Kammer ermöglicht eine bessere Schmiermittelversorgung in der Kammer. Weiterhin hate es sich gezeigt, dass hierdurch auf einfache Weise eine bessere Schmierung der Dichtung(en) der Kammern erreicht wird insbesondere im oberen Bereich der Dichtung.

Eine weitere Lösung der Erfindung sieht vor, dass die Luftabsaugleitung mit wenigstens einem Unterdruckspeicher verbunden ist, der bevorzugt mit einer Druckerfassungseinrichtung verbunden ist. Hierdurch ist es auf einfache Weise möglich, die unter Umständen pulsierenden Wirkung der Vakuumpumpe zu dämpfen und gleichzeitig ein temporäres Luftabsaugen zum Druckausgleich ohne ein Betätigen der Vakuumpumpe zu bewirken.

Vorteilhaft ist weiterhin, dass der zu regelnde Ist-Druck p2 der Kammer P2 kleiner gleich dem Druck p1-IST der Kammer P1 ist, dass der zu regelnde Ist-Druck p2' der Kammer P2` kleiner gleich dem Druck p2-IST der Kammer P2 ist, und dass der zu regelnde Ist-Druck p3 der Kammer P3 kleiner gleich dem Druck p2-IST der Kammer P2 oder p2'-IST der Kammer P2' ist und kleiner gleich dem Druck p4-IST der Kammer P4. Damit wird auf einfache Weise verhindert, dass die Lippendichtung zur benachbarten Kammer geöffnet wird und ein in der zu regelnden Kammer befindliches Medium wie beispielsweise Öl durch die jeweilige Dichtung in die benachbarte Kammer gelangen kann.

Vorteilhaft ist weiterhin, dass der zu regelnde Ist-Druck p2 der Kammer P2 größer gleich dem Druck p1-IST der Kammer P1 - die Druckdifferenz ΔpL1 der Lippendichtung L1 ist, dass der zu regelnde Ist-Druck p2' der Kammer P2` größer gleich dem Druck p2-IST der Kammer P2 - die Druckdifferenz ΔpL2' der Lippendichtung L2' ist, und dass der zu regelnde Ist-Druck p3 der Kammer P3 größer gleich (dem Druck p2-IST der Kammer P2 oder p2'-IST der Kammer P2`) - (die Druckdifferenz ΔpL1 der Lippendichtung L1 oder die Druckdifferenz ΔpL2' der Lippendichtung L2`) ist und größer gleich dem Druck p4-IST der Kammer P4 - die Druckdifferenz ΔpL3 der Lippendichtung L3. dass die Lippendichtung versagt, weil die Druckdifferenz zwischen zwei Kammern größer als die von der Lippendichtung leistbare Druckdifferenz ist und damit die Dichtung beschädigt wird.

Weiterhin wird die erfindungsgemäße Aufgabe durch ein Verfahren zur Regelung des Drucks in einem Hauptantriebsdichtungssystem in einem Hauptantriebsdichtungssystem für eine Antriebswelle eines Schneidrades einer Tunnelbohrmaschine, insbesondere nach einem der zuvor beschriebenen Merkmale, mit wenigstens einem Raum P0 mit einem ersten Druck p0 hinter einem Schneidrad der Tunnelbohrmaschine, wobei der Raum P0 mit einer Druckerfassungsvorrichtung verbunden ist, und wobei das Hauptantriebsdichtungssystem folgende Merkmale aufweist:
wenigstens eine erste Kammer P1 mit einem ersten Druck p1, wobei es sich bevorzugt bei der ersten Kammer P1 um eine mit einem Sperrfett (HBW) gefüllte Labyrinthkammer handelt, wobei die erste Kammer P1 mit einer Druckerfassungsvorrichtung verbunden ist,
wenigstens eine zweite Kammer P2 mit einem zweiten Druck p2, wobei es sich bei der wenigstens einen zweiten Kammer P2 um eine Öl- und Druckluftdichtungskammer P2 handelt, wobei die zweite Kammer P2 mit einer Druckerfassungsvorrichtung verbunden ist,
bevorzugt wenigstens eine weitere zweiten Kammer P2` mit einem weiteren zweiten Druck p2', wobei es sich bei der wenigstens einen weiteren zweiten Kammer P2` um eine Öl- und Druckluftdichtungskammer P2' handelt, wobei die weiter zweite Kammer P2` mit einer Druckerfassungsvorrichtung verbunden ist,
wenigstens eine dritte Kammer P3 mit einem dritten Druck p3 wobei es sich bei der wenigstens einen dritten Kammer P3 um eine Leckageerkennungskammer handelt, wobei die dritte Kammer P3 mit einer Druckerfassungsvorrichtung verbunden ist,
wenigstens eine vierte Kammer P4 mit einem vierten Druck p4, wobei es sich bei der wenigstens einen vierten Kammer P4 um eine Getriebekammer handelt, wobei die vierte Kammer P4 mit einer Druckerfassungsvorrichtung verbunden ist,
jeweils wenigstens eine Lippendichtung L1, L2`, L2, L3 zwischen den Kammern P1, P2, P2', P3, P4, die jeweils einem Differenzdruck ΔpL1, ΔpL2`, ΔpL2, ΔpL3 zwischen den benachbarten Kammern widerstehen kann, und
wenigstens einer elektronischen Steuerung, die wenigstens eine Datenspeichereinheit, wenigstens eine Datenverarbeitungseinheit und wenigstens eine Steuerbefehlausgabeeinheit aufweist, wobei in der Steuerung wenigstens ein Programm zum Bereitstellen eines auf der wenigstens einen elektronischen Steuerung basierten Regelkreis für den zu regelnden Druck p2-IST, p2'-IST, p3-IST, p4-IST ausgeführt wird, mit den Verfahrensschritten:
   Messen, Empfangen und Speichern des Drucks p0 und/oder des Druck p1-IST,
   Festlegen und Speichern eines Druckaufschlags Δp1 und Berechnen eines Drucks p1-SOLL nach der Formel p1-SOLL= p0+ Δp1, wobei bevorzugt ein Prüfungsschritt vorgesehen ist, dass p1-SOLL größer als p0 ist,
   Berechnen eines Referenzdrucks pREF, wobei es sich bei dem Referenzdruck um den Druck p0 im ersten Raum P0 + Druckaufschlags Δp1 oder den Druck p1-IST in der ersten Kammer P1 handelt,
   Messen und Empfangen wenigstens eines zu regelnden Ist-Drucks p2-IST, p2'-IST, p3-IST, p4-IST;
   Festlegen eines Differenzdrucks wenigstens einer Lippendichtung ΔpL1-STEUERUNG, ΔpL2`-STEUERUNG, ΔpL2-STEUERUNG, ΔpL3-STEUERUNG,
   Festlegen und Speichern eines Druckzuschlags Δp4ZUSCHLAG zwischen der dritten und der vierten Kammer P3, P4,
   Berechnen eines Solldruck p2-SOLL, p2'-SOLL, p3-SOLL, p4-SOLL mit wenigstens einer der nachfolgenden Formeln: 1. p2-SOLL = pREF - ΔpL1-STEUERUNG 2. p2'-SOLL = p2-IST - ΔpL2`-STEUERUNG oder p2`-SOLL = pREF - ΔpL1-STEUERUNG - ΔpL2`-STEUERUNG, 3. p3-SOLL = (p2-IST oder p2'-IST) - (ΔpL2-STEUERUNG oder ΔpL2`-STEUERUNG) oder p3-SOLL = pREF - ΔpL1-STEUERUNG - ΔpL2`-STEUERUNG - ΔpL2-STEUERUNG, und 4. p4-SOLL = p3-IST+ Δp4ZUSCHLAG oder p4-SOLL = pREF - ΔpL1-STEUERUNG - ΔpL2`-STEUERUNG - ΔpL2-STEUERUNG + Δp4ZUSCHLAG,
   Berechnen einer Druckdifferenz Δpi zwischen pi-SOLL und pi-IST, wobei i die Nummer der Kammer ist, deren IST-Druck geregelt wird, und prüfen, ob Δpi in einem Bereich x<0<y liegt, wobei x, y eine untere Intervallgrenze und eine obere Intervallgrenze sind,
   wobei, wenn Δpi in dem Bereich x<0<y liegt, das erste Druckluftschaltventil der wenigstens einen Kammer i und das zweite Druckluftschaltventil der wenigstens einen Kammer i so angesteuert werden, dass sie geschlossen sind, wobei, wenn Δpi > y ist, das erste Druckluftschaltventil der wenigstens einen Kammer i so angesteuert wird, dass es geöffnet wird, wobei das zweite Druckluftschaltventil der wenigstens einen Kammer i so angesteuert ist, dass es geschlossen ist, und wobei, wenn Δpi < x ist, das zweite Druckluftschaltventil der wenigstens einen Kammer i so angesteuert wird, dass es geöffnet wird, wobei das erste Druckluftschaltventil der wenigstens einen Kammer i so angesteuert ist, dass es geschlossen ist.

Weiterhin haben die bisher bekannten Hauptantriebsdichtungssysteme einen Verbesserungsbedarf dahingehend, dass die Dichtwirkung der Lippen verbessert werden soll, wenn in den Kammern P2 bis P4 lediglich Atmosphärendruck anliegen müsste, da dann die Lippendichtungen L1 bis L4 lediglich mit ca. einem Differenzdruck von 0,2 bar dichtend auf die Welle drücken.

Zur Verbesserung ist daher vorgesehen ein Hauptantriebsdichtungssystem für eine Antriebswelle eines Schneidrades einer Tunnelbohrmaschine mit wenigstens einem Raum (P0) mit einem ersten Druck (p0) hinter dem Schneidrad, aufweisend
wenigstens eine erste Kammer (P1) mit einem ersten Druck (p1), wobei es sich bevorzugt bei der ersten Kammer (P1) um eine mit einem Sperrfett (HBW) gefüllte Labyrinthkammer handelt,
wenigstens eine zweite Kammer (P2) mit einem zweiten Druck (p2), wobei es sich bei der wenigstens einen zweiten Kammer (P2) um eine Öl- und Druckluftdichtungskammer (P2) handelt,
wenigstens eine Dichtung (L1) zwischen der wenigstens einen ersten Kammer (P1) und der wenigstens eine zweiten Kammer (P2), die einem Differenzdruck ΔpL1 zwischen der wenigstens einen ersten Kammer (P1) und der wenigstens einen zweiten Kammer (P2) widerstehen kann,
bevorzugt wenigstens eine weitere zweite Kammer (P2') mit einem weiteren zweiten Druck (p2`) im Anschluss an die wenigstens eine zweite Kammer (P2), wobei es sich bei der wenigstens einen weiteren zweiten Kammer (P2') um eine Öl- und Druckluftdichtungskammer (P2') handelt,
wenigstens eine Dichtung (L2') zwischen der wenigstens einen zweiten Kammer (P2) und der wenigstens eine weiteren zweiten Kammer (P2'), die einem Differenzdruck ΔpL2` zwischen der wenigstens einen zweiten Kammer (P2) und der wenigstens einen weiteren zweiten Kammer (P2`) widerstehen kann,
wenigstens eine dritte Kammer (P3) mit einem dritten Druck (p3) im Anschluss an die wenigstens eine zweite Kammer (P2) oder der an die wenigstens eine weitere zweite Kammer (P2`), wobei es sich bei der wenigstens einen dritten Kammer (P3) um eine Leckageerkennungskammer (P3) handelt,
wenigstens eine Dichtung (L2) zwischen der wenigstens einen zweiten Kammer (P2) oder der wenigstens einen weiteren zweiten Kammer (P2') und der wenigstens einen dritten Kammer (P3), die einem Differenzdruck ΔpL2 zwischen der wenigstens einen zweiten Kammer (P2) oder der wenigstens einen weiteren zweiten Kammer (P2') und der der wenigstens einen dritten Kammer (P3) widerstehen kann,
wenigstens eine vierte Kammer (P4) mit einem vierten Druck (p4) im Anschluss an die wenigstens eine dritte Kammer (P3), wobei es sich bei der wenigstens einen vierten Kammer (P4) um eine Getriebekammer (P4) handelt,
wenigstens eine Dichtung (L3) zwischen der wenigstens einen dritten Kammer (P3) und der wenigstens einen vierten Kammer (P4), die einem Differenzdruck ΔpL3 zwischen der wenigstens einen dritten Kammer (P3) und der der wenigstens einen vierten Kammer (P4) widerstehen kann, **dadurch gekennzeichnet, dass** wenigstens eine zweite Kammer (P2), wenigstens eine weitere zweite Kammer (P2`), wenigstens eine dritte Kammer (P3) und/oder wenigstens eine vierte Kammer (P4) mit einer Luftabsaugleitung pneumatisch verbunden ist, die mit einer Vakuumpumpe pneumatisch verbunden ist, do dass über die Vakuumpumpe ein Druck in wenigstens einer der Kammer einstellbar ist, der kleiner als der Atmosphärendruck ist.

Es hat sich überraschend gezeigt, dass es so auf einfache Weise möglich ist, in einer oder mehreren Kammern einen Druck bereitzustellen, der kleiner als der Atmosphärendruck ist. Es hat sich weiterhin überraschend gezeigt, dass hierdurch die Dichtwirkung in den Kammern erhöht werden kann, indem die Dichtung an die abzudichtende Welle angesaugt werden.

Eine weitere Lösung der Erfindung sieht vor, dass zwischen einer der Kammern und der Vakuumpumpe und wenigstens ein Luftschaltventil und/oder wenigstens eine Drossel in der Luftabsaugleitung (93) vorgesehen ist, und dass bevorzugt das wenigstens ein Luftschaltventil und/oder die wenigstens eine Drossel elektrisch schaltbar sind. Weiterhin ist vorteilhaft, dass wenigstens eine der Kammern zum Erfassen eines IST-Drucks der Kammer mit wenigstens einer Druckerfassungsvorrichtung verbunden ist. Eine weitere Lösung der Erfindung sieht vor, dass eine Steuerung (80) vorgesehen ist, die mit der Vakuumpumpe (95), dem wenigstens einen Luftschaltventil (23, 23', 33, 43) und/oder der wenigstens einen Drossel (233, 233', 333, 433) und/oder der wenigstens einen Druckerfassungsvorrichtung (24, 24`, 34, 44) elektrisch verbunden ist.

Es hat sich gezeigt, dass es sich hierbei um einfache Lösungen handelt, mit denen es auf einfache Weise möglich ist, den Druck entsprechend geregelt unter den Atmosphärendruck abzusenken und zu halten.

Eine weitere Lösung der Erfindung sieht vor, dass eine Steuerung (80) vorgesehen ist, die wenigstens eine Datenspeichereinheit, wenigstens eine Datenverarbeitungseinheit und wenigstens eine Steuerbefehlausgabeeinheit aufweist, und dass wenigstens ein auf der wenigstens einen elektronischen Steuerung (80) basierter Regelkreis zur Regelung des eines IST-Drucks in einer der Kammern (P2, P2', P3, P4) vorgesehen ist, das einen Programmschritt aufweist:
Festlegen eines SOLL-Drucks für eine der Kammern (P2, P2', P3, P4), Empfangen eines IST-Drucks für eine der Kammern (P2, P2', P3, P4), Berechnen einer Druckdifferenz Δpi zwischen pi-SOLL und pi-IST, Ansteuern der Vakuumpumpe (95), des wenigstens einen Luftschaltventil (23, 23', 33, 43) und/oder der wenigstens einen Drossel (233, 233', 333, 433) zum Ändern von pi-IST hin zu pi-SOLL.

Eine weitere Lösung der Erfindung sieht vor, dass in der Steuerung (80) eine Reihe der Soll-Drücke der Kammern (P1, P2, P2', P3, P4) gespeichert ist: p0 < p1-SOLL > p2-SOLL ≥ p2`-SOLL ≥ p3-SOLL ≤ p4-SOLL, wobei die weitere zweite Kammer (P2') und ihr Druck p2`-SOLL entfallen kann.

Weiterhin haben die bisher bekannten Hauptantriebsdichtungssystem ggf. Schwierigkeiten, über die gesamte Einsatzzeit der Tunnelbohrmaschine eine durchgängig hinreichende Schmierung bereitzustellen. Häufig kommt hierbei eine Sumpfschmierung zum Einsatz, bei der das Öl sich am tiefsten Punkt der Dichtung sammelt und dann durch die Drehung der Welle nach oben mitgenommen wird. Dabei kann nicht immer sichergestellt werden, dass hinreichendes Schmiermittel am obersten Punkt der Dichtung hinreichend bereitgestellt wird.

Zur Verbesserung ist daher vorgesehen ein Hauptantriebsdichtungssystem für eine Antriebswelle eines Schneidrades einer Tunnelbohrmaschine aufweisend
wenigstens eine erste Kammer P1, wobei es sich bevorzugt bei der ersten Kammer P1 um eine mit einem Sperrfett (HBW) gefüllte Labyrinthkammer handelt, wenigstens eine zweite Kammer P2, wobei es sich bei der wenigstens einen zweiten Kammer P2 um eine Öl- und Druckluftdichtungskammer P2 handelt, wenigstens eine Dichtung L1 zwischen der wenigstens einen ersten Kammer P1 und der wenigstens eine zweiten Kammer P2, bevorzugt wenigstens eine weitere zweite Kammer P2' im Anschluss an die wenigstens eine zweite Kammer P2 vorgesehen ist, wobei es sich bei der wenigstens einen weiteren zweiten Kammer P2` um eine Öl- und Druckluftdichtungskammer P2' handelt, wenigstens eine dritte Kammer P3 im Anschluss an die wenigstens eine zweite Kammer P2 oder der an die wenigstens eine weitere zweite Kammer P2' vorgesehen ist, wobei es sich bei der wenigstens einen dritten Kammer P3 um eine Leckageerkennungskammer P3 handelt, wenigstens eine Dichtung L2 zwischen der wenigstens einen zweiten Kammer P2 oder der wenigstens einen weiteren zweiten Kammer P2 und der wenigstens einen dritten Kammer P3,
wenigstens eine vierte Kammer P4 im Anschluss an die wenigstens eine dritte Kammer P3 vorgesehen ist, wobei es sich bei der wenigstens einen vierten Kammer (P4) um eine Getriebekammer P4 handelt, wenigstens eine Dichtung L3 zwischen der wenigstens einen dritten Kammer P3 und der wenigstens einen vierten Kammer P4, dadurch gekennzeichnet, dass für wenigstens eine der zweiten, weiteren zweiten, dritten und/oder vierten Kammern P2, P2', P4 mit einer Umwälzpumpe für das in der Kammer befindliche Öl verbunden ist, und dass die Verbindung über wenigstens eine Leitung fluidisch mit wenigstens einem Ansaugpunkt der Kammer P2, P2',P4 zum Absaugen des Öls aus der Kammer P2, P2', P4 und über wenigstens eine weitere Leitung fluidisch mit wenigstens einem Einbringpunkt der Kammer P2, P2', P4 zum Einbringen des Öls in die Kammer P2, P2', P4 vorgesehen ist.

Vorteilhaft ist dabei, wenn das Öl vor oder hinter der Umwälzpumpe gefiltert wird, bzw. Fremdstoffe aus dem Öl abgeschieden werden und/oder die Qualität des Öls geprüft wird. Das Umwälzen des Öls in der jeweiligen Kammer ermöglicht eine bessere Schmiermittelversorgung in der Kammer. Weiterhin hate es sich gezeigt, dass hierdurch auf einfache Weise eine bessere Schmierung der Dichtung(en) der Kammern erreicht wird insbesondere im oberen Bereich der Dichtung.

Eine weitere Lösung der Erfindung sieht vor, dass vor oder hinter der Umwälzpumpe ein Filter zum Filtern des Öls vorgesehen ist.

Eine weitere Lösung der Erfindung sieht vor, dass vor oder hinter der Umwälzpumpe ein Abscheider zum Abscheiden von Feststoffen oder Flüssigkeiten im Öl vorgesehen ist.

Eine weitere Lösung der Erfindung sieht vor, dass beim Umwälzen des Öls eine Qualitätskontrolle des Öls erfolgt.

Weiterhin kann, wenn die Leckageerkennungskammer P3 ebenfalls mit Öl gefüllt ist, diese ebenfalls mit einer Umwälzpumpe versehen sein.

### KURZBESCHREIBUNG DER ZEICHNUNGEN

Zur besseren Veranschaulichung der technischen Lösungen von Ausführungsformen der vorliegenden Anwendung oder der herkömmlichen Technologie werden die Zeichnungen, auf die zur Beschreibung der Ausführungsformen oder der herkömmlichen Technologie Bezug genommen wird, im Folgenden kurz beschrieben. Offensichtlich sind die Zeichnungen in der folgenden Beschreibung nur einige Beispiele für die vorliegende Anwendung, und für die Fachleute können andere Zeichnungen auf der Grundlage dieser Zeichnungen ohne kreative Bemühungen erhalten werden. Dabei zeigen:
- Fig. 1: ein schematisches Diagramm der Hauptantriebsdichtung für eine Schildmaschine gemäß einer Ausführungsform der vorliegenden Anwendung,
- Fig. 2: eine Schematische Darstellung eines erfindungsgemäßen Druckbeaufschlagungs- und Druckregelsystem der Hauptantriebsdichtungsstruktur, und
- Fig. 3 - 6: schematische Darstellungen von Druckverläufen in der Hauptantriebsdichtung in Abhängigkeit eines Ausgangsdrucks p0.

### DETAILLIERTE BESCHREIBUNG DER AUSFÜHRUNGSFORMEN

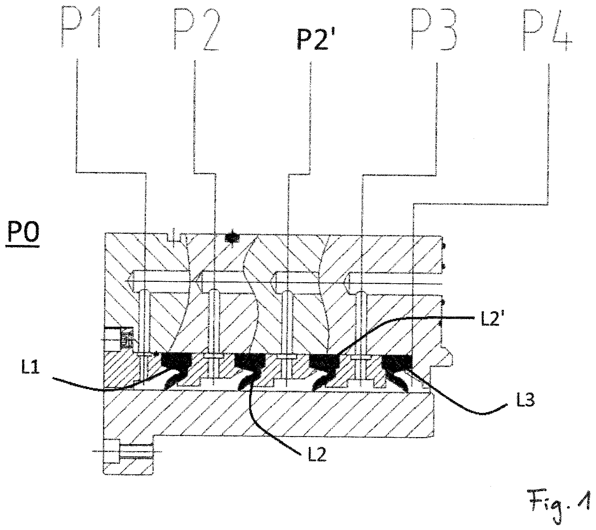

Fig. 1 zeigt den prinzipiellen Aufbau eines erfindungsgemäßen Hauptantriebsdichtungssystem. Vor dem Hauptantriebsdichtungssystem ist ein Raum P0 vorgesehen, der der Raum hinter dem Schneidrad (nicht dargestellt) der Tunnelbohrmaschine ist und in dem sich ein Erdbrei aus gelöstem Boden/Gestein, Wasser/Bentonitsuspension und ggf. Schaum befindet. Mit diesem fluidisch verbunden ist das Hauptantriebsdichtungssystem, das den Spalt zwischen der Welle des Hauptantriebssystems und der Tunnelbohrmaschine abgedichtet. Die Abdichtung funktioniert sowohl statisch als auch dynamisch, wenn sich der Schneidrad und damit die Welle dreht.

Das Hauptantriebsdichtungssystem ist dabei von links nach rechts wie nachfolgend dargelegt aufgebaut. Zunächst erfolgt eine Kammer P1, die fluidisch mit dem Raum P0 verbunden ist. Bei der Kammer P1 handelt es sich bevorzugt um eine sogenannte Labyrinthdichtung, in die ein Sperrfett (bevorzugt HBW) unter Druck eingebracht wird. Im Anschluss daran folgt eine zweite Kammer P2. Die Kammer P1 ist durch eine Dichtung L1 von der Kammer P2 getrennt.

Bevorzugt handelt es sich hier bei der Dichtung L1 um eine orientierte Lippendichtung. Die Lippendichtung weist dafür einen oberen Körper auf, an dem eine Lippe über einen gelenkartigen Bereich bewegbar angeordnet ist. Die Orientierung ist dabei so vorgesehen, dass ein in der Kammer P1 anliegender Druck auf den Lippenteil der Dichtung L1 drückt, sodass dieser gegen die Welle gepresst wird.

Im Stand der Technik wird in die Kammer zwei für gewöhnlich ein Schmierfett, beispielsweise EP2, eingebracht. Erfindungsgemäß ist hier vorgesehen, dass es sich bei der Kammer P2 um eine Öl- und Druckluftdichtungskammer handelt, die mit Druckluft beaufschlagt bar ist und die nachfolgend als erste Kammer P2, Kammer P2 oder Ölkammer P2 synonym bezeichnet wird.

Auf die Kammer P2 erfolgt eine Öl- und Druckluftdichtungskammer P2', die mit Druckluft beaufschlagt bar ist und die nachfolgend als Kammer P2', zweite Kammer P2' oder Ölkammer P2' synonym bezeichnet wird. Die weitere Kammer P2 ist über eine Dichtung L2 von der Kammer P2 getrennt. Bevorzugt ist hier als Dichtung L2 wieder eine Lippendichtung vorgesehen, die zur Kammer P2 hin orientiert ist. Die Kammer P2' ist ebenfalls eine unter Druck gesetzte Ölkammer. Sofern notwendig, können weitere Kammern P2' als Ölkammer im Anschluss vorgesehen sein.

Hier dargestellt folgt auf die Kammer P2' die Kammer P3, die nachfolgend auch als Leckagekammer P3 oder Leckageerkennungskammer P3 synonym bezeichnet wird, und die über eine Dichtung L3 von der Kammer P2' getrennt ist. Bei der Kammer P3 handelt es sich um eine Leckageerkennungskammer. Sie ist für gewöhnlich ohne Schmiermittelfüllung vorgesehen. Sie kann durch Druckluft beaufschlagt unter Druck gesetzt werden. Die Orientierung der Lippendichtung L2' zwischen der Kammer P2' und der Kammer P3 ist zur Kammer P2' ausgerichtet. Die Kammer P3 dient zur Erkennung, ob eine der Dichtungen versagt hat, indem Erdbrei/Flüssigkeit aus dem Raum P0, Schmieröl aus der Kammer P2/P2' und/oder Getriebeöl aus der Kammer P4 in die Kammer P3 eintritt.

Im Anschluss an die Kammer P3 folgt die Kammer P4, bei der es sich um die Getriebekammer handelt. Zwischen der Kammer P3 der Kammer P4 ist eine Dichtung L3 vorgesehen. Dichtung L3 ist dabei bevorzugt als Lippendichtung ausgeführt und ist zur Kammer P4 hin orientiert, und somit gegensätzlich zu den Dichtungen L1, L2, L2' angeordnet. Die Kammer P4 ist ebenfalls mit Öl - hier Getriebeöl - gefüllt und kann mit Druckluft unter Druck gesetzt werden.

In der Kammer P1 herrscht ein Druck p1. Der Druck p1 wird dabei so eingestellt, dass er größer als der Druck p0 ist, da die Kammer P1 als Sperrfettskammer mit Fettverlust ausgelegt ist. Dieses bedeutet, dass das Sperrfett (HBW) mit Druck in die Kammer P1 eingepresst wird und, da es sich bei dem Sperrfett nicht um ein so genanntes Lebensdauerfett handelt, nach vorne in den Raum P0 durch den Labyrinthspalt ausgepresst wird. Dieses erfolgt durch das Einpressen des Sperrfetts mit dem Druck p1, der sich als Druck p0 + einen Druckaufschlag Δp1 ergibt. Für gewöhnlich beträgt der Druckaufschlag Δp1 0,5 bar.

Die Dichtungen L1, L2, L2' und L3 sind so ausgelegt, dass sie in der Lage sind, einem bestimmten beaufschlagt Druck standzuhalten, bis die Dichtung beschädigt wird und damit durchlässig wird. Bei einer Lippendichtung erfolgt die Beschädigung dadurch, dass die auf die Welle gepresste Lippe durchschlägt. Bei den Dichtungen wird unterschieden zwischen dem zulässigen statischen Differenzdruck der Dichtung und dem zulässigen dynamischen Differenzdruck der Dichtung. Der statische Differenzdruck ist dabei deutlich höher als der dynamische Differenzdruck. Je nach Dichtungsart kann beispielsweise der statischen Differenzdruck 12bar und dynamischen Differenzdruck 5 bar betragen. Aus Sicherheitsgründen wird der zulässige dynamische Differenzdruck in der Auslegung des Dichtungssystems nicht voll angesetzt, sondern es wird ein geringerer Differenzdruck angesetzt, sodass ein Sicherheitspuffer vorliegt. Dieser beträgt bei einer dynamischen Dichtung, die beispielsweise 5 bar zulässigen dynamischen Differenzdruck aufweist, bevorzugt 3 bar. Diese Druckdifferenz wird nachfolgend als ΔpLi bezeichnet, wobei das "Li" für die jeweilige Nummer der Kammer steht. Bevorzugt kann das ΔpLi beispielsweise zur Schonung der Dichtung kleiner als der des zuvor angesetzte ΔpLi berücksichtigt werden. Dieses wird nachfolgend als ΔpLi-STEUERUNG (ΔpLi-ST) bezeichnet.

Damit das Dichtungssystem dicht gegenüber dem anliegenden Druck p0 in dem Raum P0 ist, muss das Dichtungssystem dem dort herrschenden Druck p0 einen Gegendruck bereitstellen, der insgesamt gesehen wenigstens so groß wie der anliegende Druck p0 ist. Dieses wird erreicht durch das berücksichtigen der Differenzdrücke der Dichtungen L1 bis L3 und dem unter Druck setzen Kammern P1 bis P4.

Überraschenderweise hat sich herausgestellt, dass die Lippen der Dichtungen L1 bis L4 durch vorsehen eines Drucks in einer Kammer auf der Rückseite der Dichtung, der kleiner als der Atmosphärendruck ist, die Dichtung damit verstärkt an die Welle herangezogen werden kann und damit die Dichtwirkung der Dichtung in dem Fall, dass auf der Vorderseite der Dichtung Atmosphärendruck oder ein Druck vorherrscht, der nur geringfügig größer als der Atmosphärendruck ist, verbessert werden kann.

Um zu vermeiden, dass Getriebeöl aus der Kammer P4 in die Leckageerkennungskammer P3 austritt, wird weiterhin P4 mit einem Druck p4 eingestellt, der größer als der Druck p3 in der Kammer P3 ist. Hierfür wird ein Δp4-ZUSCHLAG in der Kammer P hier zur Druckerhöhung gegenüber dem Druck in der Kammer P3 vorgesehen. Hierdurch wird die Dichtwirkung der Dichtung L3 verbessert, und es ist wird verhindert, dass sich die Dichtung L3 öffnet, falls der Druck p3 in der Kammer P3 größer als der Druck p4 ohne Δp4-ZUSCHLAG in der Kammer P4 ist, wodurch sich der Lippenteil von der Welle abheben würde und gleichzeitig Getriebeöl aus der Kammer P4 durch die Öffnung in die Kammer P3 austreten könnte.

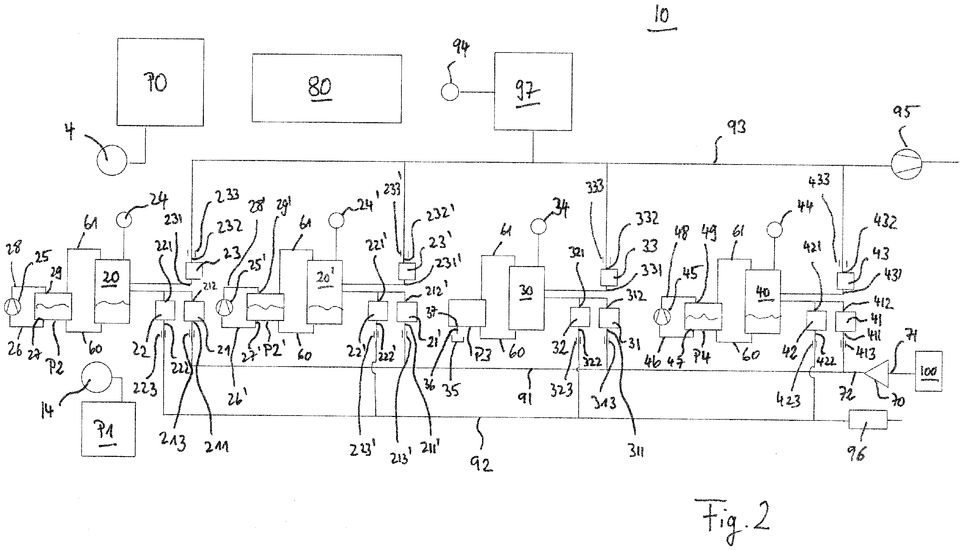

Fig. 2 zeigt den schematischen Aufbau des Druckbeaufschlagungs- und Druckregelsystems 10, mit dem die Kammern P2 bis P4 unter Druck gesetzt werden können. Gleichzeitig sind die Mittel dargestellt, mit denen Drücke in den Kammern in Abhängigkeit eines sich ändernden Referenzdrucks angepasst werden können. Hierfür ist insbesondere wenigstens ein auf einer elektronischen Steuerung 80 basierter Regelkreis zur Regelung der Drücke p1 bis p4 in den jeweiligen Kammern vorgesehen.

Fig. 2 zeigt ein erfindungsgemäßes Druckbeaufschlagungs- und Druckregelsystem10, um die Kammern P2 bis P4 des Dichtungssystems mit Druck beaufschlagt zu können und die Drücke in Abhängigkeit eines sich ggf. ändernden Referenzdruckes regeln zu können.

Dafür ist die Kammer P2 fluidisch mit einem Niveauausgleichstank 20 verbunden. Sowohl in der Kammer P2 als auch im Niveauausgleichstank 20 ist jeweils Schmieröl enthalten. Die Kammer P2 und der Niveauausgleichstank 20 sind über eine Leitung 60 fluidisch miteinander verbunden, sodass sich der Ölstand im Niveauausgleichstank 20 und der Kammer P2 ausgleichen kann. Gleichzeitig sind der Niveauausgleichstank 20 und die Kammer P2 über eine Druckluftleitung 61 fluidisch miteinander verbunden. Über diese Druckluftleitung 61 kann der Druck ausgehend vom Niveauausgleichstank 20 in der Kammer P2 ausgeglichen werden. Der vorgenannte Aufbau gilt auch für die Kammer P2', die über eine Ölleitung 60 und eine Druckluftleitung 61 fluidisch mit einem Niveauausgleichstank 20' verbunden ist. Weiterhin ist auch die Kammer P4 über eine Ölleitung 60 und eine Druckluftleitung 61 in gleicher Weise mit dem Niveauausgleichstank 40 verbunden. Im Niveauausgleichstank 40 und der Kammer P4 ist jeweils Getriebeöl vorhanden.

Auch die Kammer P3 ist über eine Ölleitung 60 und eine Druckluftleitung 61 mit dem Niveauausgleichstank 30 verbunden. Der Niveauausgleichstank 30 dient jedoch primär als Drucklufttank. Über den Niveauausgleichstank 30 kann allerdings auch festgestellt werden, ob in der Kammer P3, die regulär ölfrei betrieben wird, Öl oder Flüssigkeit/Fremdstoffe eintritt, entweder aus der Kammer P2/P2' oder P4 bedingt durch eine Störung eintritt. Zum Ablassen dieses eingetretenen Hügels ist die Kammer P3 über eine Leitung 36, die Akten einem Ablass. 37, der bevorzugt im Sumpf von P3 vorgesehen ist, mit einem Aufwandgefäß 35 verbunden.

Weiterhin ist bevorzugt wenigstens eine der Kammern P2, P2' und P4 mit einer Umwälzpumpe 25, 25', 45 versehen, die über eine Leitung 26, 26', 46 mit einem Ansaugpunkte 27, 27', 47 der Kammer P2, P2', P4 zum Absaugen des Öls aus der Kammer P2, P2', P4 verbunden sind. Weiterhin ist die Umwälzpumpe 25, 25', 45 über einen Leitung 28, 28', 48 fluidisch einem Einbringpunkt 29, 29', 49 der Kammer P2, P2', P4 zum Einbringen des Öls in die Kammer P2, P2', P4 verbunden. Das Umwälzen des Öls in der jeweiligen Kammer P2, P2', P4 ermöglicht eine bessere Schmiermittelversorgung in der Kammer P2, P2' und P4 bzw. eine bessere Schmierung deren Dichtung L2, L2', L4, insbesondere im oberen Bereich der Dichtung.

Sollte beispielsweise in der Kammer P3 auch eine Ölschmierung vorgesehen werden, würde es vorteilhaft sein, eine entsprechende Umwälzpumpe (nicht dargestellt) in gleicher Weise vorgesehen.

Zusätzlich kann (nicht dargestellt) vor oder hinter der Umwälzpumpe 25, 25', 45 ein Filter oder ein Abscheider zum Trennen von Fremdstoffen aus dem Öl vorgesehen sein. Weiterhin kann bevorzugt eine Qualitätskontrolle des Öls vorgesehen werden, um einen eventuellen Ölaustausch oder die Notwendigkeit einer Reinigung des Öls festzustellen.

Symbolisch dargestellt ist der Raum P0 hinter der Abbaukammer, der mit einer Druckerfassungsvorrichtung 4 verbunden ist, um den Druck p0 zu messen. Das Messergebnis wird digital umgewandelt und an die mit der Druckerfassungsvorrichtung 4 verbundene Steuerung 80 übermittelt. Diese Messdaten werden entsprechend in der Steuerung 80 gespeichert und zur weiteren Berechnung verwendet.

Auch die Kammern P1, P2, P2', P3 und P4 sind jeweils mit einer Druckerfassungsvorrichtung 14, 24, 24', 34, 44 verbunden, um den jeweiligen IST-Druck in den Kammern P1, P2, P2', P3, P4 zu messen. Diese gemessenen IST-Drücke p1-IST, p2-IST, p2'-IST, p3-IST, p4-IST werden digital umgewandelt und an die mit den Druckerfassungsvorrichtung 14, 24, 24', 34, 44 verbundene Steuerung 80 übermittelt. Diese Messdaten werden entsprechend in der Steuerung 80 gespeichert und zur weiteren Berechnung verwendet.

Das Druckbeauftragungssystem 10 umfasst weiterhin eine Druckluftquelle 100, die mit einem Einlass 71 eines Drucklufteingangsanschlusses 70 verbunden ist. Der Drucklufteingangsanschluss 70 weist einen Auslass 72 auf, der mit einer Druckluftleitung 91 verbunden ist.

An die Druckluftleitung 91 sind die Druckluftschaltventile 21, 21', 31, 41 fluidisch über deren Drucklufteinlass 211, 211', 311, 411 angeschlossen. Ausgangsseitig weist das Druckluftschaltventil 21, 21', 31, 41 einen Druckluftauslass 212, 212', 312, 412 auf, der fluidisch mit dem Niveauausgleichstank 20, 20', 30, 40 verbunden ist. Die Druckluftschaltventile 21, 21', 31, 41 sind mit der Steuerung 80 verbunden, um von dieser Schaltbefehle zum Schalten zwischen einer geöffneten und einer geschlossenen Position zu empfangen und den Schaltstatus an die Steuerung zu übermitteln.

Weiterhin kann vor dem Drucklufteinlass 211, 211', 311, 411 oder hinter dem Druckluftauslass 212, 212', 312, 412 eine Drossel 213, 213', 313, 413 vorgesehen sein. Die Drossel kann bevorzugt mit der Steuerung an steuerbar verbunden sein und regelbar sein. Mit der Drossel 213, 213', 313, 413 ist es möglich, die Durchflussmenge der Druckluft vor oder hinter dem Druckluftschaltventil 21, 21', 31, 41 einzustellen. Bevorzugt erfolgt dieses über Steuerbefehle von der Steuerung 80.

Weiterhin ist eine Druckablassleitung 92 vorgesehen, die an einem Ende zu Umgebung und damit zum Atmosphärendruck offen ausgeführt ist. Zwischen der Umgebung und der Leitung ist bevorzugt ein Schalldämpfer 96 vorgesehen.

Weiterhin ist die Druckablassleitung 92 mit einem zweiten Druckluftschaltventil 22, 22', 32, 42 der jeweiligen Kammer P2, P2', P3, P4 über dessen Druckluftauslass 222, 222', 322, 422 verbunden. Der Drucklufteinlass 221, 221', 321, 421 ist fluidisch mit dem Niveauausgleichstank 20, 20', 30, 40 entweder direkt oder mit der Leitung zwischen dem Niveauausgleichstank 20, 20', 30, 40 und dem Druckluftauslass 212, 212', 312, 412 verbunden. Die Druckluftschaltventile 22, 22', 32, 42 sind mit der Steuerung 80 verbunden, um von dieser Schaltbefehle zum Schalten zwischen einer geöffneten und einer geschlossenen Position zu empfangen und den Schaltstatus an die Steuerung zu übermitteln.

Weiterhin ist eine Luftabsaugungsleitung 93 vorgesehen, die mit einer Vakuumpumpe 95 ausgangsseitig verbunden ist. Die Vakuumpumpe 95 hat eine Ableitung in die Atmosphäre. Die Luftabsaugungsleitung 93 ist mit einem dritten Druckluftschaltventil 23, 23', 33, 43 der jeweiligen Kammer P2, P2', P3, P4 über dessen Druckluftauslass 232, 232', 332, 432 verbunden. Der Drucklufteinlass 231, 231', 331, 431 des dritten Druckluftschaltventils 23, 23', 33, 43 ist mit dem Niveauausgleichstank 20, 20', 30, 40 fluidisch verbunden. Die Druckluftschaltventile 23, 23', 33, 43 sind mit der Steuerung 80 verbunden, um von dieser Schaltbefehle zum Schalten zwischen einer geöffneten und einer geschlossenen Position zu empfangen und den Schaltstatus an die Steuerung zu übermitteln. Die Vakuumpumpe 95 ist ebenfalls mit der Steuerung 80 verbunden.

Das erste Druckluftschaltventil 21,21', 31, 41, das zweite Druckluftschaltventil 22, 22', 32, 42 und/oder das dritte Druckluftschaltventil 23, 23', 33, 43 sind mit der Steuerung 80 jeweils verbunden. Über entsprechende Steuerbefehle kann die Steuerung das Öffnen und Schließen der Druckluftschaltventile bewirken.

Die (Druck-)Absaugleitung 93 ist weiterhin bevorzugt mit einem Unterdruckspeicher 97 verbunden, der eine Druckerfassungsvorrichtung 94 aufweist. Die Druckerfassungsvorrichtung 94 ist der Steuerung 80 zur Übermittlung der Messwerte verbunden. Mit dem Unterdruckspeicher 97 ist es möglich, die unter Umständen pulsierenden Wirkung der Vakuumpumpe 95 zu dämpfen und gleichzeitig ein temporäres Luftabsaugen zum Druckausgleich ohne ein Betätigen der Vakuumpumpe 95 zu bewirken.

Vor dem Drucklufteinlass oder Druckluftauslass des zweiten Druckluftschaltventils 22, 22', 32, 42 und/oder dritten Druckluftschaltventils 23, 23', 33, 43 kann weiterhin eine Drossel 223, 223', 323, 423 bzw. 233, 233', 333, 433 vorgesehen sein. Diese ist bevorzugt mit der Steuerung 80 verbunden. Weiterhin ist die Drossel 223, 223', 323, 423 bzw. 233, 233', 333, 433 bevorzugt einstellbar, sodass die Durchflussmenge der Druckluft durch die Druckluftschaltventile 22, 22', 32, 42 bzw. 23, 23', 33, 43 einstellbar ist.

Die elektronische Steuerung 80 weist wenigstens eine Datenspeichereinheit, wenigstens eine Datenverarbeitungseinheit und wenigstens eine Steuerbefehlsausgabe Einheit auf. Die Einheiten selber sind in Figur zwei nicht dargestellt.

Das Druckbeauftragungssystem erhält durch die Steuerung 80 einen Regelkreis zur Regelung der Drücke p2, p2', p3, p4 in den Kammern P2, P2`. P3, P4. Dafür ist ein Steuerprogramm in der Steuerung 80 mit folgenden Schritten vorgesehen:
Empfangen und Speichern des Drucks p0 von der Druckerfassungsvorrichtung 4 und/oder des Drucks p1-IST von der Druckerfassungsvorrichtung 14.

Festlegen und Speichern eines Druckaufschlags Δp1 und berechnen des Drucks p1-SOLL nach der Formel p1-SOLL = p0 plus Δp1. Das Festlegen erfolgt dabei entweder direkt durch einen in dem Programm vorgesehenen Wert oder durch Eingeben eines Werts durch einen Bediener über ein Eingabegerät der Steuerung 80. Bevorzugt ist ein Prüfschritt vorgesehen, bei dem geprüft wird, dass p1-SOLL > p0 ist. Nur in diesem Fall ist gewährleistet, dass die Kammer P1 im Sperrfettverlustbetrieb betrieben wird. Wäre der Druck p1-SOLL kleiner als der Druck p0 bestünde zusätzlich die Gefahr, dass im Raum P0 befindlicher Erdbrei bzw. in diesem befindliche Flüssigkeit in die Kammer P1 eindringen könnte.

Als weitere Schritt ist im Programm vorgesehen Festlegen und Speichern des Differenzdrucks ΔpL1-STEUERUNG (ΔpL1-ST), ΔpL2-STEUERUNG (ΔpL2-ST), ΔpL2`-STEUERUNG (ΔpL2'-ST), ΔpL3-STEUERUNG (ΔpL3-ST). Werden Dichtungen im Dichtungssystem nicht vorgesehen, entfällt das Festlegen und Speichern des jeweiligen Differenzdrucks dieser Dichtung. Gleiches gilt, falls zusätzliche Dichtungen vorgesehen sind. Für diese würde dann ebenfalls ein entsprechendes ΔpL festgelegt und gespeichert. Bevorzugt wird beim Festlegen ein Prüfungsschritt vorgesehen, dass ΔpLi -STEUERUNG kleiner als oder gleich groß wie die Druckdifferenz ΔpLi die der Dichtung Li ist. "Li" ist hierbei die Nummer der Dichtung. Das Festlegen selbst erfolgt entweder durch einen im Programm vorgegebenen Wert oder durch das Eingeben durch einen Bediener über eine Bedieneinheit. Wird das ΔpLi-STEUERUNG kleiner gewählt als der vom Hersteller angegebene ΔpLi-Wert kann dieses zur Reduzierung des Verschleißes der Dichtung oder zur Erhöhung der Sicherheit in Bezug auf die jeweilige Dichtung dienen.

Ein weiterer bevorzugter Programmschritt ist Festlegen eines Referenzdruckes pREF wobei pREF = p0 + Δp1 und/oder pREF = p1-IST ist. Das Festlegen des tatsächlichen IST-Druckes in der Kammer P1 wäre hier vorteilhaft, hat allerdings den Nachteil, dass Drücke im Sperrfett schwierig genau messbar sind aufgrund der Reibung des Sperrfettes und der Temperaturabhängigkeit der Viskosität des Sperrfettes. Deshalb wird als Referenzdruck pREF P0 + Δp1 bevorzugt.

Als weiterer Programmschritt ist vorgesehen Empfangen und Speichern des Druckes pi-IST der jeweiligen Kammer Pi über die jeweilige Druckerfassungsvorrichtung 24, 24`, 34, 44 der jeweiligen Kammer P2, P2', P3, P4. Soll ein Druck pi einer Kammer Pi nicht geregelt werden, kann das Empfangen und Speichern dieses IST-Druckes entsprechend entfallen.

Ein weiterer vorgesehener Programm Schritt ist Berechnen eines Drucks p2-SOLL nach der Formel p2-SOLL= pREF-ΔpL1-STEUERUNG, bzw. Berechnen eines Drucks p2'-SOLL nach der Formel p2`-SOLL = pREF- ΔpL1-STEUERUNG -ΔpL2-STEUERUNG oder nach der Formel p2`-SOLL =p2-IST - ΔpL2-STEUERUNG, Berechnen eines Drucks p3-SOLL nach der Formel p3-SOLL = pREF- ΔpL1-STEUERUNG - ΔpL2-STEUERUNG - ΔpL2`-STEUERUNG oder nach der Formel p3-SOLL =p2'-IST - ΔpL2`-STEUERUNG.

Bevorzugt ist dabei für p2-SOLL ein Prüfungsschritt vorgesehen, dass p2-SOLL in einem Bereich zwischen pREF und pREF- ΔpL1 liegt. Ist p2-SOLL größer als pREF besteht die Gefahr, dass die Dichtung L1 geöffnet wird und Schmieröl in die Kammer P1 eintritt, wodurch die Sperrwirkung des Sperrfettes verschlechtert wird. Ist p2-SOLL kleiner als pREF - ΔpL1 erhöht sich die Gefahr, dass die Dichtung L1 versagt und schlimmstenfalls nach innen gedrückt wird.

Bevorzugt ist dabei für p2'-SOLL ein Prüfungsschritt vorgesehen, dass p2'-SOLL in einem Bereich zwischen p2-IST und p2-IST - ΔpL2 liegt. Ist p2`-SOLL größer als p2-IST besteht die Gefahr, dass die Dichtung L2 geöffnet wird und Schmieröl in die Kammer P2 eintritt. Ist p2`-SOLL kleiner als p2-IST - ΔpL2 erhöht sich die Gefahr, dass die Dichtung L2 versagt und schlimmstenfalls nach innen gedrückt wird.

Bevorzugt ist dabei für p3-SOLL ein Prüfungsschritt vorgesehen, dass p3-SOLL in einem Bereich zwischen p2'-IST und p2'-IST- ΔpL2` sowie in einem Bereich zwischen p4-IST und p4-IST- ΔpL3 liegt. Ist p3-SOLL größer als p2'-IST oder p4-IST besteht die Gefahr, dass die Dichtung L2' oder die Dichtung L3 geöffnet wird und Öl in die Kammer P3 eintritt. Ist p3-SOLL kleiner als p2'-IST-ΔpL2` oder p4-IST- ΔpL3 erhöht sich die Gefahr, dass die Dichtung L2 oder die Dichtung L3 versagt und schlimmstenfalls nach innen gedrückt wird.

Zum Regeln des Druckes p2-IST/p2'-IST/p3-IST sieht das Programm vor Berechnen und Speichern einer Druckdifferenz Δp2 / Δp2' / Δp3= p2-SOLL - p2-IST / p2`-SOLL - p2'-IST / p3-SOLL - p3-IST und Prüfen, ob die Druckdifferenz Δp2 / Δp2` / Δp3 in einem Bereich x<0<y liegt, wobei x eine untere Intervallgrenze und y eine obere Intervallgrenze darstellen. Das Ansteuern der Druckluftschaltventile 21, 22, 23 / 21', 22', 23' / 31, 32, 33 zum Regeln des Drucks p2-IST / p2'-IST / p3-IST in der Kammer P2 / P2' / P3 erfolgt dabei nach den nachfolgenden Schritten:
Wenn Δp2 / Δp2` / Δp3 in einem Bereich x<0<y liegt, dann sind das erste Druckluftschaltventil 21, 21', 31 und das zweite Druckluftschaltventil 22, 22', 32 sowie gegebenenfalls auch das dritte Druckluftschaltventil 23, 23', 33 so von der Steuerung angesteuert, dass sie geschlossen sind.
Wenn Δp2 / Δp2` / Δp3 > y ist, gibt die Steuerbefehlausgabeeinheit der Steuerung 80 ein Signal zum Öffnen des ersten Druckluftschaltventils 21, 21', 31 an das erste Druckluftschaltventil 21, 21', 31, wobei das zweite Druckluftschaltventil 22, 22', 32 und/oder das dritte Druckluftschaltventil 23, 23', 33 so angesteuert sind, dass sie geschlossen sind.
Wenn Δp2 / Δp2` / Δp3 <x ist, gibt die Steuerbefehlausgabeeinheit der Steuerung 80 ein Signal zum Öffnen des zweiten Druckluftschaltventils 22, 22`, 32 und/oder des dritten Druckluftschaltventils 23, 23', 33 an das zweite Druckluftschaltventil 22, 22', 32 und/oder das dritte Druckluftschaltventil 23, 23`, 33, wobei das erste Druckluftschaltventil 21, 21', 31 so angesteuert ist, dass es geschlossen ist.

Durch Öffnen und Schließen der Druckluftschaltventile 21, 22, 23 / 21', 22', 23' / 31, 32, 33 wird der Druck p2-IST / p2'-IST / p3-IST an den Druck p2-SOLL / p2`-SOLL / p3-SOLL angeglichen, indem Druckluft über die Druckluftschaltventile 21, 22, 23 / 21', 22', 23' / 31, 32, 33 entweder hinzugefügt oder abgelassen bzw. abgesaugt wird.

Zur Regelung des Druckes p4 ist der Kammer P4 (Getriebekammer) sieht das Steuerprogramm der elektronischen Steuerung die Schritte vor
Festlegen und Speichern eines Druckaufschlag Δp4-ZUSCHLAG (Δp4-ZU);
Berechnen und Speichern eines Drucks p4-SOLL nach der Formel p4-SOLL = P3-IST + Δp4-ZUSCHLAG;
Festlegen und Speichern des Differenzdrucks ΔpL3-STEUERUNG, wobei bevorzugt ein Prüfungsschritt vorgesehen ist, dass ΔpL3-STEUERUNG kleiner als oder gleich groß wie die Druckdifferenz ΔpL3 der Dichtung L3 ist;

Empfangen und Speichern des Drucks p4-IST und Berechnung der Druckdifferenz Δp4 zwischen p4-SOLL und p4-IST, und Prüfen, ob die Druckdifferenz Δp4 in einem Bereich x<0<y liegt, wobei x eine untere Intervallgrenze und y eine obere Intervallgrenze darstellen. Das Ansteuern der Druckluftschaltventile 41, 42, 43 zum Regeln des Drucks p4-IST in der Kammer P4 erfolgt dabei nach den nachfolgenden Schritten:
Wenn Δp4 in einem Bereich x<0<y liegt, dann sind das erste Druckluftschaltventil 41 und das zweite Druckluftschaltventil 42 sowie gegebenenfalls auch das dritte Druckluftschaltventil 43 so von der Steuerung angesteuert, dass sie geschlossen sind.
Wenn Δp4 > y ist, gibt die Steuerbefehlausgabeeinheit der Steuerung 80 ein Signal zum Öffnen des ersten Druckluftschaltventils 41 an das erste Druckluftschaltventil 41, wobei das zweite Druckluftschaltventil 42 und/oder das dritte Druckluftschaltventil 43 so angesteuert sind, dass sie geschlossen sind.
Wenn Δp4 <x ist, gibt die Steuerbefehlausgabeeinheit der Steuerung 80 ein Signal zum Öffnen des zweiten Druckluftschaltventils 42 und/oder des dritten Druckluftschaltventils 43 an das zweite Druckluftschaltventil 42 und/oder das dritte Druckluftschaltventil 43, wobei das erste Druckluftschaltventil 41 so angesteuert ist, dass es geschlossen ist.

Durch Öffnen und Schließen der Druckluftschaltventile 41, 42, 43 wird der Druck p4-IST an den Druck p4-SOLL angeglichen, indem Druckluft über die Druckluftschaltventile 41, 42, 43 entweder hinzugefügt oder abgelassen bzw. abgesaugt wird.

Das Druckablassen aus einer Kammer P2 bis P4 erfolgt bevorzugt über das zweite Druckluftschaltventil 22, 22', 32, 42 über die Druckluftablassleitung 92 und den Schalldämpfer 96 und/oder über die dritten Druckluftschaltventile 23, 23', 33, 43 und die Luftabsaugleitung 93 und die Vakuumpumpe 95. Ergibt die Berechnung für einen Solldruck, dass dieser kleiner gleich Atmosphärendruck ist, so kann in der entsprechenden Kammer entweder Atmosphärendruck angelegt werden, indem die Steuerung 80 das zweite Druckluftschaltventil 22, 22', 32, 42 öffnet und damit, ohne dass eine weitere Regelung erforderlich wäre, über die Druckluftablassleitung 92 sich in der entsprechenden Kammer der Atmosphärendruck einstellt.

Das erfindungsgemäße Verfahren zur Druckregelung erfolgt bevorzugt entsprechend den zuvor beschriebenen Schritten des Steuerungsprogramms.

Alternativ kann in der entsprechenden Kammer auch ein Druck eingestellt werden, der kleiner als der Atmosphärendruck ist. Hierfür bleibt dann das zweite Druckluftschaltventil 22, 22', 32, 42 geschlossen und die Steuerung 80 steuert die Vakuumpumpe 95 an, um über die Luftabsaugleitung 93 nach Öffnen des jeweiligen dritten Druckluftschaltventil 23, 23', 33, 43 in der entsprechenden Kammer P2 bis P4 den IST-Druck auf einen Druck kleiner dem Atmosphärendruck einzustellen. Der SOLL-Druck wird dabei entsprechend auf einen notwendigen Wert kleiner Atmosphärendruck festgesetzt oder berechnet.

Alternativ können die Drücke in den Kammern P2 bis P4 im Hinblick auch geregelt werden, indem das erste Druckluftschaltventil 21, 21', 31, 41 von der Steuerung 80 geöffnet wird, und das zweite Druckluftschaltventil 22, 22', 32, 42 und/oder das dritte Druckluftschaltventil 23, 23', 33, 43 ebenfalls geöffnet werden. Die Drosseln 213, 223, 233, 213', 223', 233', 313, 323, 333, 413, 423, 433 der Druckluftschaltventile 21, 21', 31, 41, 22, 22`, 32, 42, 23, 23', 33, 43 werden dabei dann so eingestellt, dass zum Halten des IST-Druck in der jeweiligen Kammer P2-P4 genauso viel Druckluft in die jeweilige Kammer P2-P4 über das erste Druckluftschaltventil 21, 21', 31, 41 einströmt wie über das zweite Druckluftschaltventil 22, 22`, 32, 42 und/oder das dritte Druckluftschaltventil 23, 23', 33, 43 abströmt. Ändert sich dann der Referenzdruck pREF werden entweder Druckluftschaltventile kurzzeitig geöffnet oder geschlossen um den IST-Druck entsprechend zu ändern oder die Einstellung der Drosseln wird entsprechend geändert, so dass zum Erhöhen des IST-Drucks in der Kammer über das erste Druckluftschaltventil 21, 21', 31, 41 mehr Druckluft in die Kammer einströmt als über das zweite Druckluftschaltventil 22, 22', 32, 42 und/oder das dritte Druckluftschaltventil 23, 23', 33, 43 abströmt, oder zum Reduzieren des IST-Drucks in der Kammerüber über das erste Druckluftschaltventil 21, 21', 31, 41 weniger Druckluft in die Kammer einströmt als über das zweite Druckluftschaltventil 22, 22', 32, 42 und/oder das dritte Druckluftschaltventil 23, 23`, 33, 43 abströmt. Die Einstellung der Drosseln zum Erhöhen/Absenken des Drucks wird entsprechend beibehalten, bis IST-Druck der jeweiligen Kammer den SOLL-Druck erreicht.

Es ist auch möglich, die Drücke in den jeweiligen Kammern eines Dichtungssystems über eine Kombination über die Stellventile oder die Drosseln zu regeln.

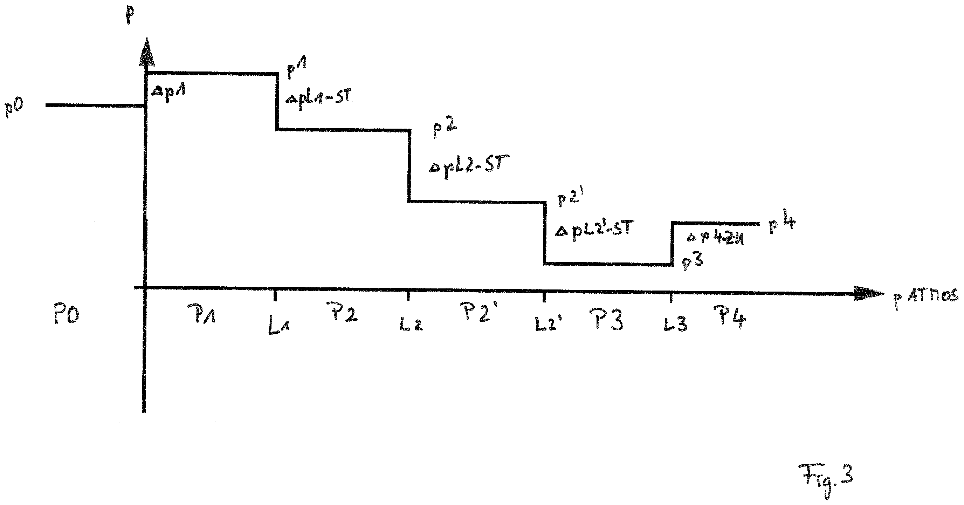

Die Fig. 3-6 zeigen unterschiedliche Druckverläufe über die Kammern P1 bis P4 und den dazwischenliegenden Dichtungen des Dichtungssystems an. Dabei ist auf der y-Achse der jeweilige herrschende Druck abgetragen und auf der x-Achse die jeweilige Kammer und Dichtung. Die x-Achse selber hat den Druckwert der Atmosphäre, dargestellt als P-ATMOS.

In Fig. 3 ist ein Druckverlauf dargestellt, in dem alle Kammern P1-P4 entsprechend unter Druck gesetzt sind, um ein Druckgleichgewicht bereitzustellen und einen Gegendruck für den im Raum P0 herrschenden Druck p0 zu erzeugen. Zunächst wird Δp1 zum Druck p0 hinzugefügt, sodass ein höherer Druckwert p1 entsteht. Davon wird eine Druckdifferenz ΔpL1-ST in der Dichtung L1 abgetragen, sodass sich in der Kammer P2 ein Druck p2 durch die Regelung einstellt. In der Dichtung L2 zwischen den Kammern P2 und P2' wird dann die Druckdifferenz ΔpL2-ST abgetragen, sodass sich zum Bereitstellen des Gleichgewichts in der Kammer P2' der Druck p2' einstellen muss. Da die Druckreduzierung ΔpL2'-ST in der Dichtung L2' nicht ausreicht, um die Kammer P3 nicht unter Druck zu setzen, muss in der Kammer P3 der Druck p3 bereitgestellt werden, der größer als der Atmosphärendruck ist. Um die Dichtwirkung der Dichtung L3 zu erhöhen und das Risiko des Öffnens der Dichtung L3 zu verringern, wird bevorzugt entsprechend der Druck p4 in der Kammer P4 um Δp4-ZU erhöht.

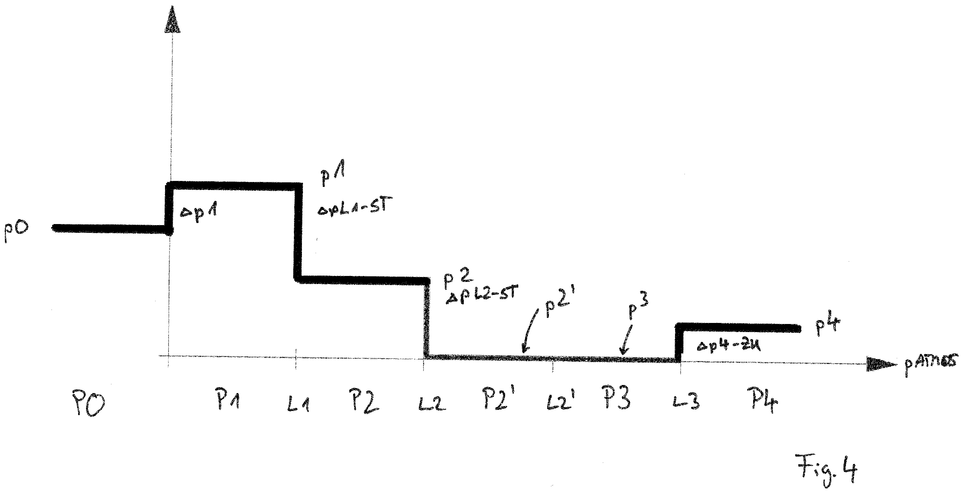

Entsprechend wird auch in Fig. 4 verfahren. Hier ist P0 allerdings kleiner als in Fig. 3, sodass es über Δp1-ST und Δp2-ST möglich ist, die Kammer P2' auf Atmosphärendruck einzustellen. In Fig. 4 wird dann auch der Druck in P3 auf Atmosphärendruck eingestellt. Die Eigendichtwirkung der Dichtung L2' von ca. 0,2 bar mit der sich die Lippendichtung L2' auf die Welle drückt, reicht hier aus, um zu verhindern das die Dichtung L2' öffnet und Öl aus der Kammer P2' in die Kammer P3 austritt. Um zu verhindern, dass die Dichtung L3 öffnet und Getriebeöl aus der Kammer P4 in die Kammer P3 gelangt wird, wieder bevorzugt ein Δp4-zu auf den Druck p3 in Kammer P3 zugeschlagen, um den Druck p4 in Kammer P4 einzustellen. Die Druckdifferenz Δp4-zu muss dabei kleiner sein als die von der Dichtung L3 aufnehmbare Druckdifferenz ΔpL3.

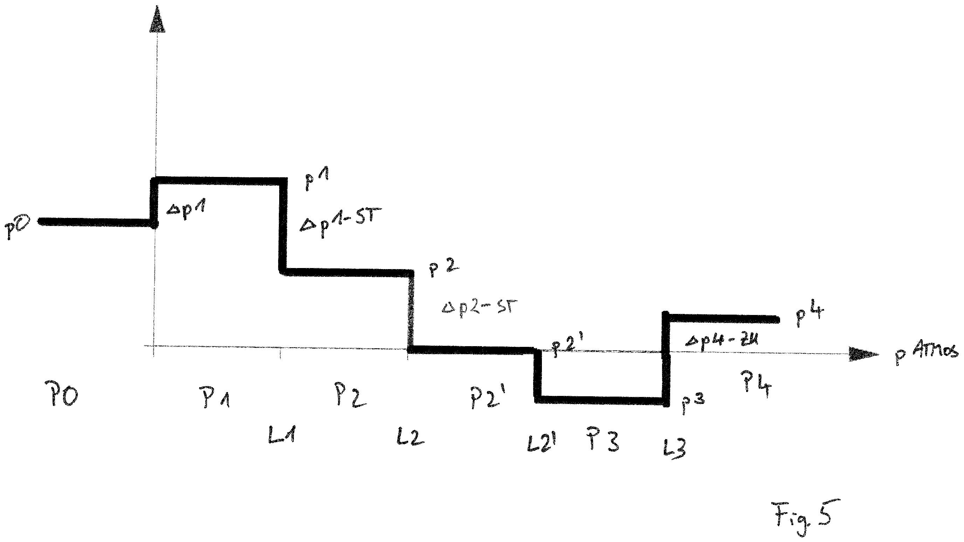

Fig. 5 zeigt bis zur Kammer P2' den gleichen Druckverlauf wie Figur 4. Zur Erhöhung der Dichtwirkung der Dichtung LP2' gegenüber der Kammer P3 wird in der Kammer P3 ein Druck unterhalb des Atmosphärendruckes über die Vakuumpumpe 95 und das dritte Druckluftschaltventil 33 eingestellt. Die Druckdifferenz zwischen dem Druck p2' und dem Druck p3 muss dabei kleiner sein als das ΔpL2` der Dichtung L2'. Der Druck p4 wird dabei wiederum mit einem Δp4-ZU gegenüber dem eingestellten Druck p3 erhöht. Dargestellt ist hier ein Überdruck in P4. Alternativ kann hier auch der Atmosphärendruck in der Kammer P4 anliegen.

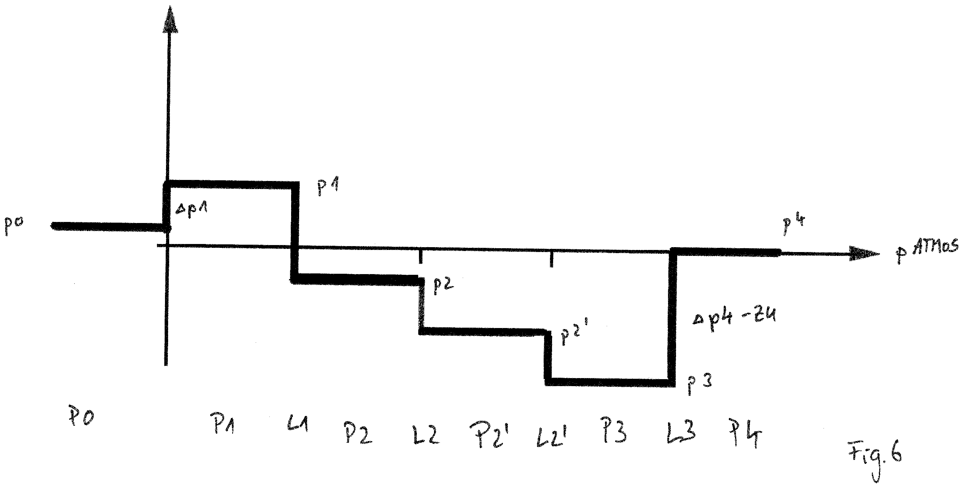

In Fig. 6 wird ein Druckverlauf gezeigt, bei dem bereits der Differenzdruck der Lippendichtung ΔpL1 ausreichend ist, einen ausreichenden Gegendruck gegen P0 bereitzustellen. In diesem Fall könnten die Kammern P2 bis P4 alle mit Atmosphärendruck beaufschlagt werden.

Es hat sich aber wie in Fig. 6 herausgestellt, dass die Dichtwirkung der Lippendichtungen L1 - L3 entsprechend verbessert wird, wenn in den Kammern P2 bis P3 ein Unterdruck < dem Atmosphärendruck bereitgestellt wird und damit die die Dichtung L1 bis L3 zur Verstärkung der Dichtwirkung gegenüber der Welle an die Welle herangesaugt werden. Ein entsprechender Unterdruck gegenüber dem Atmosphärendruck ist in Fig. 6 in den Kammern P2, P2' und P3 gezeigt. Bevorzugt werden hierfür fest eingestellte Werte in der Steuerung 80 hinterlegt. P4 kann dann wieder mit einem Zuschlag versehen werden und entweder auf Atmosphärendruck oder einem Überdruck oder Unterdruck in Bezug auf den Atmosphärendruck eingestellt werden. Regelungstechnisch ist hier der Atmosphärendruck zu bevorzugen, da dafür lediglich das Druckluftschaltventil 42 geöffnet werden muss und keine weitere Regelung durch Öffnen und Schließen von Druckluft Schaltventilen erfolgen muss.

Bei der Regelung sind für die Drücke der einzelnen Kammer P1 bis P4 bestimmte Maximalbedingungen und Minimalbedingungen einzuhalten.

Der maximale Druck in P1 stellt sich durch den Druckaufschlag Δp 1 ein. Ein höherer Druck durch Einpressen des Sperrfetts HBW ist möglich gegebenenfalls aber nicht sinnvoll. Als minimaler Druck in P1 ist der Druck o0 des Raums P0 einzusetzen. Ist der Druck in Kammer P1 kleiner als p0 besteht die Gefahr, dass Fremdkörper aus dem Raum P0 in die Dichtung eindringen.

Damit die Dichtung L1 durch den Druck in P2 nicht öffnet, darf der maximale Druck p2 in der Kammer P2 der IST-Druck in P1 betragen. Der minimale Druck in P2 darf nicht kleiner sein als der IST-Druck in P1 minus die Druckdifferenz ΔpL1 der Dichtung L1.

Ist p2-SOLL gleich p1-IST - ΔpL1-ST kleiner gleich dem Atmosphärendruck so können in P2 entweder der Atmosphärendruck oder ein Unterdruck eingestellt werden.

Um zu verhindern, dass die Dichtung L2 zwischen P2 und Kammer P2' öffnet darf der maximale Druck P2`gleich dem Druck P2-IST sein. Der minimale Druck P2`ist hier wiederum P2-ist - ΔpPL2, um zu verhindern, dass die Dichtung L2 versagt.

Ist der Druck in P2' = P2-IST - ΔpL2 kleiner gleich dem Atmosphärendruck so kann der Druck P2`-SOLL auf den Atmosphärendruck oder einen Unterdruck eingestellt werden.

Der maximale Ist-Druck p3 darf den Druck p2-IST oder p4-IST nicht überschreiten, um zu verhindern, dass die Dichtungen L2'oder L3 öffnen. Um ein Versagen der Dichtungen zu vermeiden darf p3-IST nicht kleiner sein, als die Differenz aus p2'-IST - ΔpL2'oder p4-IST - ΔpL3. Entsprechend den zuvor genannten Bedingungen kann der Druck p3 auch als Atmosphären oder Unterdruck eingestellt werden. Gleiches gilt analog für p4.

Insgesamt gesehen müssen in den Kammern Drücke eingestellt werden, die zusammen mit den Differenzdrücken der Dichtungen in der Lage sind, mit p0 ein Gleichgewicht zu erreichen.

## Patentansprüche

1. Hauptantriebsdichtungssystem für eine Antriebswelle eines Schneidrades einer Tunnelbohrmaschine mit wenigstens einem Raum (P0) mit einem ersten Druck (p0) hinter dem Schneidrad, aufweisend
wenigstens eine erste Kammer (P1) mit einem ersten Druck (p1), wobei es sich bevorzugt bei der ersten Kammer (P1) um eine mit einem Sperrfett (HBW) gefüllte Labyrinthkammer handelt,
wenigstens eine zweite Kammer (P2) mit einem zweiten Druck (p2), wobei es sich bei der wenigstens einen zweiten Kammer (P2) um eine Öl- und Druckluftdichtungskammer (P2) handelt,
wenigstens eine Dichtung (L1) zwischen der wenigstens einen ersten Kammer (P1) und der wenigstens eine zweiten Kammer (P2), die einem Differenzdruck ΔpL1 zwischen der wenigstens einen ersten Kammer (P1) und der wenigstens einen zweiten Kammer (P2) widerstehen kann,
wenigstens einen Drucklufteingangsanschluss (70),
wenigstens eine Druckluftablassleitung (92, 93),
wenigstens ein erstes Druckluftschaltventil (21) der wenigstens einen zweiten Kammer (P2) mit wenigstens einem Drucklufteinlass (211) und wenigstens einem Druckluftauslass (212), wobei das erstes Druckluftschaltventil (21) der wenigstens einen zweiten Kammer (P2) so eingerichtet ist, dass es zwischen einer offenen und einer geschlossenen Stellung schaltbar ist,
wenigstens ein zweites Druckluftschaltventil (22, 23) der wenigstens einen zweiten Kammer (P2) mit wenigstens einem Drucklufteinlass (221, 231) und wenigstens einem Druckluftauslass (222, 232), wobei das zweites Druckluftschaltventil (22, 23) der wenigstens einen zweiten Kammer (P2) so eingerichtet ist, dass es zwischen einer offenen und einer geschlossenen Stellung schaltbar ist,
wenigstens einen Einlass (71) des Drucklufteingangsanschlusses (70), der so konfiguriert ist, dass er mit einer Druckluftquelle (100) pneumatisch verbindbar ist,
wenigstens einen Auslass (72) des Drucklufteingangsanschlusses (70), der pneumatisch über eine Druckluftleitung (91) mit dem wenigstens einen Drucklufteinlass (211) des ersten Druckluftschaltventil (21) der wenigstens einen zweiten Kammer (P2) verbunden ist, wobei der wenigstens eine Druckluftauslass (212) des ersten Druckluftschaltventils (21) der wenigstens einen zweiten Kammer (P2) mit dem wenigstens einen Drucklufteinlass (221, 231) des zweiten Druckluftschaltventils (22, 23) der wenigstens einen zweiten Kammer (P2) und der wenigstens einen zweiten Kammer (P2) pneumatisch verbunden ist, und wobei ein Druckluftauslass (222, 232) des zweiten Druckluftschaltventils (22, 23) der wenigstens einen zweiten Kammer (P2) mit der Druckluftablassleitung (92, 93) pneumatisch verbunden ist,
**dadurch gekennzeichnet, dass** wenigstens eine elektronische Steuerung (80) vorgesehen ist, die wenigstens eine Datenspeichereinheit, wenigstens eine Datenverarbeitungseinheit und wenigstens eine Steuerbefehlausgabeeinheit aufweist,
dass wenigstens ein auf der wenigstens einen elektronischen Steuerung (80) basierter Regelkreis zur Regelung des zweiten Drucks (p2) in der wenigstens einen zweiten Kammer (P2) vorgesehen ist,
dass wenigstens eine erste Druckerfassungsvorrichtung (4, 14) mit dem wenigstens einen Raum (P0) oder der wenigstens einen ersten Kammer (P1) verbunden ist, um den Druck (p0) in dem Raum oder den aktuellen Druck (p1-IST) in der wenigstens einen ersten Kammer (P1) zu messen, wobei die wenigstens eine erste Druckerfassungsvorrichtung (4) mit der wenigstens einen elektronischen Steuerung (80) zur Übermittlung des Drucks elektronisch verbunden ist,
dass wenigstens eine zweite Druckerfassungsvorrichtung (24) mit der wenigstens einen zweiten Kammer (P2) verbunden ist, um den aktuellen Druck (p2-IST) in der wenigstens einen zweiten Kammer (P2) zu messen, wobei die wenigstens eine zweite Druckerfassungsvorrichtung (24) mit der wenigstens einen elektronischen Steuerung (80) zur Übermittlung des Drucks elektronisch verbunden ist,
dass das wenigstens eine erste Druckluftschaltventil (21) der wenigstens einen zweiten Kammer (P2) mit der wenigstens einen Steuereinrichtung (80) verbunden ist, so dass das wenigstens eine erste Druckluftschaltventil (21) der wenigstens einen zweiten Kammer (P2) von der Steuereinrichtung (80) elektrisch schaltbar ist,
dass das wenigstens ein zweite Druckluftschaltventil (22, 23) der wenigstens einen zweiten Kammer (P2) mit der mindestens einen Steuereinrichtung (80) verbunden ist, so dass das wenigstens eine zweite Druckluftschaltventil (22, 23) der wenigstens einen zweiten Kammer (P2) von der Steuereinrichtung (80) elektrisch schaltbar ist, und
dass die elektronische Steuerung (80) ein Steuerprogramm aufweist mit den folgenden Schritten:
Empfangen und Speichern des Drucks p0 und/oder des Druck p1-IST;
Festlegen und Speichern des Differenzdrucks ΔpL1-STEUERUNG (ΔpL1-ST), wobei bevorzugt ein Prüfungsschritt vorgesehen ist, dass der ΔpL1-STEUERUNG (ΔpL1-ST) kleiner als oder gleich groß wie die Druckdifferenz ΔpL1 ist;
Festlegen und Speichern eines Druckaufschlags Δp1 und Berechnen eines Drucks p1-SOLL nach der Formel p1-SOLL= p0+ Δp1, wobei bevorzugt ein Prüfungsschritt vorgesehen ist, dass p1-SOLL größer als p0 ist,
Festlegen eines Referenzdruckes pREF, wobei pREF einer der folgenden Drücke ist: p0+ Δp1 oder p1-IST,
Empfangen und Speichern der Drucks p2-IST der zweiten Kammer (P2),
Berechnen und Speichern eines Drucks p2-SOLL nach der Formel p2-SOLL = pREF - ΔpL1-STEUERUNG, wobei ein Prüfungsschritt vorgesehen ist, dass p2-SOLL in einem Bereich zwischen pREF und pREF- ΔpL1 liegt,
Berechnen und Speichern einer Druckdifferenz Δp2 zwischen p2-SOLL und p2-IST, und
Prüfen, ob Δp2 in einem Bereich x<0<y liegt, wobei x, y eine untere Intervallgrenze und eine obere Intervallgrenze sind,
wobei, wenn Δp2 in dem Bereich x<0< y liegt, das erste Druckluftschaltventil (21) der wenigstens einen zweiten Kammer (P2) und das zweite Druckluftschaltventil (22, 23) der wenigstens einen zweiten Kammer (P2) so von der Steuerung so angesteuert sind, dass das erste Druckluftschaltventil (21) und das zweite Druckluftschaltventil (22, 23) geschlossen sind,
wobei, wenn Δp2 > y ist, die Steuerbefehlausgabeeinheit ein Signal zum Öffnen des ersten Druckluftschaltventils (21) der wenigstens einen zweiten Kammer (P2) an das erste Druckluftschaltventil (21) der wenigstens einen zweiten Kammer (P2) sendet, wobei das zweite Druckluftschaltventil (22, 23) der wenigstens einen zweiten Kammer (P2) so angesteuert ist, dass es geschlossen ist, und
wobei, wenn Δp2 < x ist, die Steuerbefehlausgabeeinheit ein Signal zum Öffnen des zweiten Druckluftschaltventils (22, 23) der wenigstens einen zweiten Kammer (P2) an das zweite Druckluftschaltventil (22, 23) der wenigstens einen zweiten Kammer (P2) sendet, wobei das erste Druckluftschaltventil (21) der wenigstens einen zweiten Kammer (P2) so angesteuert ist, dass es geschlossen ist.

2. Hauptantriebsdichtungssystem für eine Tunnelbohrmaschine nach Anspruch 1, **dadurch gekennzeichnet, dass** wenigstens eine weitere zweite Kammer (P2') mit einem weiteren zweiten Druck (p2`) im Anschluss an die wenigstens eine zweite Kammer (P2) vorgesehen ist, wobei es sich bei der wenigstens einen weiteren zweiten Kammer (P2`) um eine Öl- und Druckluftdichtungskammer (P2`) handelt,
dass wenigstens eine Dichtung (L2') zwischen der wenigstens einen zweiten Kammer (P2) und der wenigstens eine weiteren zweiten Kammer (P2`) vorgesehen ist, die einem Differenzdruck ΔpL2` zwischen der wenigstens einen zweiten Kammer (P2) und der wenigstens einen weiteren zweiten Kammer (P2`) widerstehen kann,
dass wenigstens ein erstes Druckluftschaltventil (21') der wenigstens einen weiteren zweiten Kammer (P2`) mit wenigstens einem Drucklufteinlass (21 1') und wenigstens einem Druckluftauslass (212') vorgesehen ist, wobei das erstes Druckluftschaltventil (21') der wenigstens einen weiteren zweiten Kammer (P2`) so eingerichtet ist, dass es zwischen einer offenen und einer geschlossenen Stellung schaltbar ist,
dass wenigstens ein zweites Druckluftschaltventil (22', 23') der wenigstens einen weiteren zweiten Kammer (P2`) mit wenigstens einem Drucklufteinlass (221', 231') und wenigstens einem Druckluftauslass (222', 232') vorgesehen ist, wobei das zweites Druckluftschaltventil (22', 23') der wenigstens einen weiteren zweiten Kammer (P2`) so eingerichtet ist, dass es zwischen einer offenen und einer geschlossenen Stellung schaltbar ist,
dass wenigstens ein auf der wenigstens einen elektronischen Steuerung (80) basierter Regelkreis zur Regelung des weiteren zweiten Drucks (p2`) in der wenigstens einen weiteren zweiten Kammer (P2`) vorgesehen ist,
dass wenigstens eine weitere zweite Druckerfassungsvorrichtung (24`) mit der wenigstens einen weiteren zweiten Kammer (P2`) verbunden ist, um den aktuellen Druck (p2'-IST) in der wenigstens einen zweiten Kammer (P2`) zu messen, wobei die wenigstens eine weitere zweite Druckerfassungsvorrichtung (24`) mit der wenigstens einen elektronischen Steuerung (80) zur Übermittlung des Drucks elektronisch verbunden ist,
dass das wenigstens eine erste Druckluftschaltventil (21') der wenigstens einen weiteren zweiten Kammer (P2') mit der wenigstens einen Steuereinrichtung (80) verbunden ist, so dass das wenigstens eine erste Druckluftschaltventil (21') der wenigstens einen weiteren zweiten Kammer (P2`) von der Steuereinrichtung (80) elektrisch schaltbar ist, dass das wenigstens ein zweite Druckluftschaltventil (22', 23') der wenigstens einen weiteren zweiten Kammer (P2`) mit der mindestens einen Steuereinrichtung (80) verbunden ist, so dass das wenigstens eine zweite Druckluftschaltventil (22', 23') der wenigstens einen weiteren zweiten Kammer (P2`) von der Steuereinrichtung (80) elektrisch schaltbar ist,
dass der wenigstens einen Auslass (72) des Drucklufteingangsanschlusses (70), der pneumatisch über eine Druckluftleitung (91) mit den wenigstens einen Drucklufteinlass (21 1') des ersten Druckluftschaltventil (21') der wenigstens einen weiteren zweiten Kammer (P2`) verbunden ist, wobei der wenigstens eine Druckluftauslass (212`) des ersten Druckluftschaltventils (21') der wenigstens einen weiteren zweiten Kammer (P2') mit dem wenigstens einen Drucklufteinlass (221', 231') des zweiten Druckluftschaltventils (22', 23') der wenigstens einen weiteren zweiten Kammer (P2') und der wenigstens einen weiteren zweiten Kammer (P2`) pneumatisch verbunden ist, und wobei ein Druckluftauslass (222', 232') des zweiten Druckluftschaltventils (22', 23') der wenigstens einen weiteren zweiten Kammer (P2`) mit der Druckluftablassleitung (92, 93) pneumatisch verbunden ist, und
dass das Steuerprogramm der elektronischen Steuerung (80) die weiteren folgenden Schritte aufweist:
Festlegen und Speichern des Differenzdrucks ΔpL2`-STEUERUNG, wobei ein Prüfungsschritt vorgesehen ist, dass der ΔpL2`-STEUERUNG kleiner als oder gleich groß wie die Druckdifferenz ΔpL2` ist;
Empfangen und Speichern der Drucks p2'-IST der weiteren zweiten Kammer (P2`),
Berechnen und Speichern eines Drucks p2'-SOLL nach der Formel p2'-SOLL = p2-IST - ΔpL2`-STEUERUNG oder nach der Formel p2'-SOLL = pREF - ΔpL1-STEUERUNG - ΔpL2`-STEUERUNG, wobei ein Prüfungsschritt vorgesehen ist, dass p2`-SOLL in einem Bereich zwischen p2-IST und p2-IST - ΔpL2` liegt,
Berechnen und Speichern einer Druckdifferenz Δp2` zwischen p2'-SOLL und p2'-IST, und
Prüfen, ob Δp2'in einem Bereich x<0<y liegt, wobei x, y eine untere Intervallgrenze und eine obere Intervallgrenze sind,
wobei, wenn Δp2' in dem Bereich x<0<y liegt, das erste Druckluftschaltventil (21') der wenigstens einen weiteren zweiten Kammer (P2') und das zweite Druckluftschaltventil (22', 23') der wenigstens einen weiteren zweiten Kammer (P2`) so angesteuert sind, dass sie geschlossen sind,
wobei, wenn Δp2` > y ist, die Steuerbefehlausgabeeinheit ein Signal zum Öffnen des ersten Druckluftschaltventils (21') der wenigstens einen weiteren zweiten Kammer (P2`) an das erste Druckluftschaltventil (21') der wenigstens einen weiteren zweiten Kammer (P2') sendet, wobei das zweite Druckluftschaltventil (22', 23') der wenigstens einen weiteren zweiten Kammer (P2`) so angesteuert ist, dass es geschlossen ist, und
wobei, wenn Δp2` < x ist, die Steuerbefehlausgabeeinheit ein Signal zum Öffnen des zweiten Druckluftschaltventils (22', 23') der wenigstens einen weiteren zweiten Kammer (P2') an das zweite Druckluftschaltventil (22', 23') der wenigstens einen weiteren zweiten Kammer (P2') sendet, wobei das erste Druckluftschaltventil (21') der wenigstens einen weiteren zweiten Kammer (P2`) so angesteuert ist, dass es geschlossen ist.

3. Hauptantriebsdichtungssystem für eine Tunnelbohrmaschine nach Anspruch 1 oder 2, **dadurch gekennzeichnet, dass** wenigstens eine dritte Kammer (P3) mit einem dritten Druck (p3) im Anschluss an die wenigstens eine zweite Kammer (P2) oder der an die wenigstens eine weitere zweite Kammer (P2') vorgesehen ist, wobei es sich bei der wenigstens einen dritten Kammer (P3) um eine Leckageerkennungskammer (P3) handelt,
dass wenigstens eine Dichtung (L2) zwischen der wenigstens einen zweiten Kammer (P2) oder der wenigstens einen weiteren zweiten Kammer (P2') und der wenigstens einen dritten Kammer (P3) vorgesehen ist, die einem Differenzdruck ΔpL2 zwischen der wenigstens einen zweiten Kammer (P2) oder der wenigstens einen weiteren zweiten Kammer (P2') und der der wenigstens einen dritten Kammer (P3) widerstehen kann,
dass wenigstens ein erstes Druckluftschaltventil (31) der wenigstens einen dritten Kammer (P3) mit wenigstens einem Drucklufteinlass (311) und wenigstens einem Druckluftauslass (312) vorgesehen ist, wobei das erstes Druckluftschaltventil (31) der wenigstens einen dritten Kammer (P3) so eingerichtet ist, dass es zwischen einer offenen und einer geschlossenen Stellung schaltbar ist,
dass wenigstens ein zweites Druckluftschaltventil (32, 33) der wenigstens einen dritten Kammer (P3) mit wenigstens einem Drucklufteinlass (321, 331) und wenigstens einem Druckluftauslass (322, 323) vorgesehen ist, wobei das zweites Druckluftschaltventil (32, 33) der wenigstens einen dritten Kammer (P3) so eingerichtet ist, dass es zwischen einer offenen und einer geschlossenen Stellung schaltbar ist,
dass wenigstens ein auf der wenigstens einen elektronischen Steuerung (80) basierter Regelkreis zur Regelung des dritten Drucks (p3) in der wenigstens einen dritten Kammer (P3) vorgesehen ist,
dass wenigstens eine dritte Druckerfassungsvorrichtung (34) mit der wenigstens einen dritten Kammer (P3) verbunden ist, um den aktuellen Druck (p3-IST) in der wenigstens einen dritten Kammer (P3) zu messen, wobei die wenigstens eine dritte Druckerfassungsvorrichtung (34) mit der wenigstens einen elektronischen Steuerung (80) zur Übermittlung des Drucks elektronisch verbunden ist,
dass das wenigstens eine erste Druckluftschaltventil (31) der wenigstens einen dritten Kammer (P3) mit der wenigstens einen Steuereinrichtung (80) verbunden ist, so dass das wenigstens eine erste Druckluftschaltventil (31) von der Steuereinrichtung (80) elektrisch schaltbar ist, dass das wenigstens ein zweite Druckluftschaltventil (32, 33) der wenigstens einen dritten Kammer (P3) mit der mindestens einen Steuereinrichtung (80) verbunden ist, so dass das wenigstens eine zweite Druckluftschaltventil (32, 33) der wenigstens einen dritten Kammer (P3) von der Steuereinrichtung (80) elektrisch schaltbar ist,
dass der wenigstens einen Auslass (72) des Drucklufteingangsanschlusses (70), der pneumatisch über eine Druckluftleitung (91) mit den wenigstens einen Drucklufteinlass (311) des ersten Druckluftschaltventil (31) der wenigstens einen dritten Kammer (P3) verbunden ist, wobei der wenigstens eine Druckluftauslass (312) des ersten Druckluftschaltventils (31) der wenigstens einen dritten Kammer (P3) mit dem wenigstens einen Drucklufteinlass (321, 331) des zweiten Druckluftschaltventils (32, 33) der wenigstens einen dritten Kammer (P3) und der wenigstens einen dritten Kammer (P3) pneumatisch verbunden ist, und wobei ein Auslass (322, 332) des zweiten Druckluftschaltventils (32, 33) der wenigstens einen dritten Kammer (P3) mit der Druckluftablassleitung (92, 93) pneumatisch verbunden ist, und
dass das Steuerprogramm der elektronischen Steuerung (80) die weiteren folgenden Schritte aufweist:
Festlegen und Speichern des Differenzdrucks ΔpL2-STEUERUNG, wobei ein Prüfungsschritt vorgesehen ist, dass der ΔpL2-STEUERUNG kleiner als oder gleich groß wie die Druckdifferenz ΔpL2 ist;
Empfangen und Speichern der Drucks p3-IST der dritten Kammer (P3),
Berechnen und Speichern eines Drucks p3-SOLL nach der Formel p3-SOLL = (p2-IST oder p2'-IST) - (ΔpL2-STEUERUNG oder ΔpL2`-STEUERUNG) oder nach der Formel p3-SOLL = pREF - ΔpL1-STEUERUNG - ΔpL2`-STEUERUNG - ΔpL2-STEUERUNG, wobei jeweils ein Prüfungsschritt vorgesehen ist, dass p3-SOLL in einem Bereich zwischen p2-IST und p2-IST-ΔpL2 bzw. zwischen p2'-IST und p2'-IST - ΔpL2 liegt,
Berechnen und Speichern einer Druckdifferenz Δp3 zwischen p3-SOLL und p3-IST, und
Prüfen, ob Δp3 in einem Bereich x<0<y liegt, wobei x, y eine untere Intervallgrenze und eine obere Intervallgrenze sind,
wobei, wenn Δp3 in dem Bereich x<0<y liegt, das erste Druckluftschaltventil (31) der wenigstens einen dritten Kammer (P3) und das zweite Druckluftschaltventil (32, 33) der wenigstens einen dritten Kammer (P3) so angesteuert sind, dass sie geschlossen sind,
wobei, wenn Δp3 > y ist, die Steuerbefehlausgabeeinheit ein Signal zum Öffnen des ersten Druckluftschaltventils (31) der wenigstens einen dritten Kammer (P3) an das erste Druckluftschaltventil (31) der wenigstens einen dritten Kammer (P3) sendet, wobei das zweite Druckluftschaltventil (32, 33) der wenigstens einen dritten Kammer (P3) so angesteuert ist, dass es geschlossen ist, und
wobei, wenn Δp3 < x ist, die Steuerbefehlausgabeeinheit ein Signal zum Öffnen des zweiten Druckluftschaltventils (32, 33) der wenigstens einen dritten Kammer (P3) an das zweite Druckluftschaltventil (32, 33) der wenigstens einen dritten Kammer (P3) sendet, wobei das erste Druckluftschaltventil (31) der wenigstens einen dritten Kammer (P3) so angesteuert ist, dass es geschlossen ist.

4. Hauptantriebsdichtungssystem für eine Tunnelbohrmaschine nach Anspruch 3, **dadurch gekennzeichnet, dass** wenigstens eine vierte Kammer (P4) mit einem vierten Druck (p4) im Anschluss an die wenigstens eine dritte Kammer (P3) vorgesehen ist, wobei es sich bei der wenigstens einen vierten Kammer (P4) um eine Getriebekammer (P4) handelt,
dass wenigstens eine Dichtung (L3) zwischen der wenigstens einen dritten Kammer (P3) und der wenigstens einen vierten Kammer (P4) vorgesehen ist, die einem Differenzdruck ΔpL3 zwischen der wenigstens einen dritten Kammer (P3) und der der wenigstens einen vierten Kammer (P4) widerstehen kann,
dass wenigstens ein erstes Druckluftschaltventil (41) der wenigstens einen vierten Kammer (P4) mit wenigstens einem Drucklufteinlass (411) und wenigstens einem Druckluftauslass (412) vorgesehen ist, wobei das erstes Druckluftschaltventil (41) der wenigstens einen vierten Kammer (P4) so eingerichtet ist, dass es zwischen einer offenen und einer geschlossenen Stellung schaltbar ist,
dass wenigstens ein zweites Druckluftschaltventil (42, 43) der wenigstens einen vierten Kammer (P4) mit wenigstens einem Drucklufteinlass (421, 431) und wenigstens einem Druckluftauslass (422, 423) vorgesehen ist, wobei das zweites Druckluftschaltventil (42, 43) der wenigstens einen vierten Kammer (P4) so eingerichtet ist, dass es zwischen einer offenen und einer geschlossenen Stellung schaltbar ist,
dass wenigstens ein auf der wenigstens einen elektronischen Steuerung (80) basierter Regelkreis zur Regelung des vierten Drucks (p4) in der wenigstens einen vierten Kammer (P4) vorgesehen ist,
dass wenigstens eine dritte Druckerfassungsvorrichtung (44) mit der wenigstens einen vierten Kammer (P4) verbunden ist, um den aktuellen Druck (p4-IST) in der wenigstens einen dritten Kammer (P4) zu messen, wobei die wenigstens eine vierte Druckerfassungsvorrichtung (44) mit der wenigstens einen elektronischen Steuerung (80) zur Übermittlung des Drucks elektronisch verbunden ist,
dass das wenigstens eine erste Druckluftschaltventil (41) der wenigstens einen vierten Kammer (P4) mit der wenigstens einen Steuereinrichtung (80) verbunden ist, so dass das wenigstens eine erste Druckluftschaltventil (41) der wenigstens einen vierten Kammer (P4) von der Steuereinrichtung (80) elektrisch schaltbar ist, dass das wenigstens ein zweite Druckluftschaltventil (42, 43) der wenigstens einen vierten Kammer (P4) mit der mindestens einen Steuereinrichtung (80) verbunden ist, so dass das wenigstens eine zweite Druckluftschaltventil (42, 43) der wenigstens einen vierten Kammer (P4) von der Steuereinrichtung (80) elektrisch schaltbar ist,
dass der wenigstens einen Auslass (72) des Drucklufteingangsanschlusses (70), der pneumatisch über eine Druckluftleitung (91) mit den wenigstens einen Drucklufteinlass (411) des ersten Druckluftschaltventil (41) der wenigstens einen vierten Kammer (P4) verbunden ist, wobei der wenigstens eine Druckluftauslass (412) des ersten Druckluftschaltventils (41) der wenigstens einen vierten Kammer (P4) mit dem wenigstens einen Drucklufteinlass (421, 431) des zweiten Druckluftschaltventils (42, 43) der wenigstens einen vierten Kammer (P4) und der wenigstens einen vierten Kammer (P4) pneumatisch verbunden ist, und wobei ein Auslass (422, 432) des zweiten Druckluftschaltventils (42, 43) der wenigstens einen vierten Kammer (P4) mit der Druckluftablassleitung (92, 93) pneumatisch verbunden ist, und
dass das Steuerprogramm der elektronischen Steuerung (80) die weiteren folgenden Schritte aufweist:
Festlegen und Speichern eines Druckaufschlags Δp4ZUSCHLAG (Δp4ZU),
Berechnen und Speichern eines Drucks p4-SOLL nach der Formel p4-SOLL = p3-IST+ Δp4ZUSCHLAG (Δp4ZU),
Festlegen und Speichern des Differenzdrucks ΔpL3-STEUERUNG, wobei ein Prüfungsschritt vorgesehen ist, dass der ΔpL3-STEUERUNG kleiner als oder gleich groß wie die Druckdifferenz ΔpL3 ist;
Empfangen und Speichern der Drucks p4-IST der vierten Kammer (P4),
Berechnen und Speichern einer Druckdifferenz Δp4 zwischen p4-SOLL und p4-IST, und
Prüfen, ob Δp4 in einem Bereich x<0<y liegt, wobei x, y eine untere Intervallgrenze und eine obere Intervallgrenze sind,
wobei, wenn Δp4 in dem Bereich x<0<y liegt, das erste Druckluftschaltventil (41) der wenigstens einen vierten Kammer (P4) und das zweite Druckluftschaltventil (42, 43) der wenigstens einen vierten Kammer (P4) so angesteuert sind, dass sie geschlossen sind,
wobei, wenn Δp4 > y ist, die Steuerbefehlausgabeeinheit ein Signal zum Öffnen des ersten Druckluftschaltventils (41) der wenigstens einen vierten Kammer (P4) an das erste Druckluftschaltventil (41) der wenigstens einen vierten Kammer (P4) sendet, wobei das zweite Druckluftschaltventil (42, 43) der wenigstens einen vierten Kammer (P4) so angesteuert ist, dass es geschlossen ist, und
wobei, wenn Δp4 < x ist, die Steuerbefehlausgabeeinheit ein Signal zum Öffnen des zweiten Druckluftschaltventils (42, 43) der wenigstens einen vierten Kammer (P4) an das zweite Druckluftschaltventil (42, 43) der wenigstens einen vierten Kammer (P4) sendet, wobei das erste Druckluftschaltventil (41) der wenigstens einen vierten Kammer (P4) so angesteuert ist, dass es geschlossen ist.

5. Hauptantriebsdichtungssystem für eine Tunnelbohrmaschine nach einem der Ansprüche 1 bis 4, **dadurch gekennzeichnet, dass** der wenigstens eine Druckluftauslass (222, 232, 222', 232', 322, 332, 422, 432) des zweiten Druckluftschaltventils (22, 23, 22', 23', 32, 33, 42, 43) der wenigstens einen zweiten Kammer (P2), der wenigstens einen weiteren zweiten Kammer (P2'), der wenigstens einen dritten Kammer (P3) und/oder der wenigstens einen vierten Kammer (P4) mit der Druckluftablassleitung (92) pneumatisch verbunden ist, die bevorzugt über einen Schalldämpfer (96) mit der Umgebung verbunden ist, und/oder mit einer Luftabsaugleitung (93) pneumatisch verbunden ist, die mit einer Vakuumpumpe (95) verbunden ist, wobei bevorzugt die Vakuumpumpe (95) über die Steuerung (80) steuerbar ist.

6. Hauptantriebsdichtungssystem für eine Tunnelbohrmaschine nach einem der Ansprüche 1 bis 5, **dadurch gekennzeichnet, dass** wenigstens eine der Kammern (P2, P2', P3, P4) mit wenigstens einem dritten Druckluftschaltventil (23, 23', 33, 43) verbunden ist, das mit seinem Druckluftauslass (232, 232', 332, 432) mit einer Luftabsaugleitung (93) pneumatisch verbunden ist, die mit einer Vakuumpumpe (95) verbunden ist. so dass in der verbundenen Kammer ein Druck kleiner dem Atmosphärendruck einstellbar ist, wobei bevorzugt die Vakuumpumpe (95) über die Steuerung (80) steuerbar ist.

7. Hauptantriebsdichtungssystem für eine Tunnelbohrmaschine nach einem der Ansprüche 1 bis 6, **dadurch gekennzeichnet, dass** in der Steuerung (80) eine Reihe der Soll-Drücke der Kammern (P1, P2, P2', P3, P4) gespeichert ist: p0 < p1-SOLL > p2-SOLL ≥ p2'-SOLL ≥ p3-SOLL ≤ p4-SOLL, wobei die weitere zweite Kammer (P2') und ihr Druck p2`-SOLL entfallen kann.

8. Hauptantriebsdichtungssystem für eine Tunnelbohrmaschine nach einem der Ansprüche 1 bis 7, **dadurch gekennzeichnet, dass,** wenn in wenigstens einer der Kammern (P2, P2', P3, P4) der Solldruck kleiner Atmosphärendruck berechnet wird, der Solldruck in der Steuerung auf 1 bar oder auf einen definierten Wert zwischen 0 bar und Atmosphärendruck festgesetzt wird, der dann über das Schalten des dritten Druckluftschaltventil (23, 23', 33, 43) der jeweiligen Kammer (P2, P2', P3, P4) durch die Steuerung (80), die Luftabsaugleitung (93) und die Vakuumpumpe (95) einstellbar ist, wobei bevorzugt die Vakuumpumpe (95) über die Steuerung (80) steuerbar ist.

9. Hauptantriebsdichtungssystem für eine Tunnelbohrmaschine nach einem der Ansprüche 1 bis 8, **dadurch gekennzeichnet, dass,** wenn p0 + Δp1 kleiner ΔpL1-STEUERUNG ist, die Solldrücke der Kammern (P2, P2', P3, P4) in der Steuerung (80) auf Atmosphärendruck festgesetzt werden oder wenigstens einer der Solldrücke (p2-SOLL, p2`-SOLL, p3-SOLL, p4-SOLL) der Kammern (P2, P2', P3, P4) in der Steuerung (80) auf einen definierten Wert zwischen 0 bar und Atmosphärendruck festgesetzt wird, der dann über das Schalten des dritten Druckluftschaltventil (23, 23', 33, 43) der jeweiligen Kammer (P2, P2', P3, P4) durch die Steuerung (80), die Luftabsaugleitung (93) und die Vakuumpumpe (95) einstellbar ist, wobei bevorzugt die Vakuumpumpe (95) über die Steuerung (80) steuerbar ist.

10. Hauptantriebsdichtungssystem für eine Tunnelbohrmaschine nach einem der Ansprüche 1 bis 9, **dadurch gekennzeichnet, dass** für wenigstens eine der Kammern (P2, P2',P4) eine Umwälzpumpe (25, 25`, 45) für das in der Kammer befindliche Öl vorgesehen ist, die über wenigstens eine Leitung (26, 26', 46) fluidisch mit wenigstens einem Ansaugpunkt (27, 27`, 47) der Kammer (P2, P2`,P4) zum Absaugen des Öls aus der Kammer (P2, P2', P4) und über wenigstens eine weitere Leitung (28, 28', 48) fluidisch mit wenigstens einem Einbringpunkt (29, 29', 49) der Kammer (P2, P2', P4) zum Einbringen des Öls in die Kammer (P2, P2', P4) verbunden ist.

11. Hauptantriebsdichtungssystem für eine Tunnelbohrmaschine nach einem der Ansprüche 6 bis 10, **dadurch gekennzeichnet, dass** die Luftabsaugleitung (93) mit wenigstens einem Unterdruckspeicher (97) verbunden ist, der bevorzugt mit einer Druckerfassungseinrichtung (94) verbunden ist.

12. Verfahren zur Regelung des Drucks in einem Hauptantriebsdichtungssystem für eine Antriebswelle eines Schneidrades einer Tunnelbohrmaschine mit wenigstens einem Raum (P0) mit einem ersten Druck (p0) hinter dem Schneidrad der Tunnelbohrmaschine, insbesondere nach einem der Ansprüche 1 bis 11, wobei der Raum (P0) mit einer Druckerfassungsvorrichtung (4) verbunden ist, und wobei das Hauptantriebsdichtungssystem folgende Merkmale aufweist:
wenigstens eine erste Kammer (P1) mit einem ersten Druck (p1), wobei es sich bevorzugt bei der ersten Kammer (P1) um eine mit einem Sperrfett (HBW) gefüllte Labyrinthkammer handelt, wobei die erste Kammer (P1) mit einer Druckerfassungsvorrichtung (4) verbunden ist,
wenigstens eine zweite Kammer (P2) mit einem zweiten Druck (p2), wobei es sich bei der wenigstens einen zweiten Kammer (P2) um eine Öl- und Druckluftdichtungskammer (P2) handelt, wobei die zweite Kammer (P2) mit einer Druckerfassungsvorrichtung (24) verbunden ist,
bevorzugt wenigstens eine weitere zweiten Kammer (P2') mit einem weiteren zweiten Druck (p2'), wobei es sich bei der wenigstens einen weiteren zweiten Kammer (P2') um eine Öl- und Druckluftdichtungskammer (P2`) handelt, wobei die weiter zweite Kammer (P2`) mit einer Druckerfassungsvorrichtung (24') verbunden ist,
wenigstens eine dritte Kammer (P3) mit einem dritten Druck (p3) wobei es sich bei der wenigstens einen dritten Kammer (P3) um eine Leckageerkennungskammer (P3) handelt, wobei die dritte Kammer (P3) mit einer Druckerfassungsvorrichtung (34) verbunden ist,
wenigstens eine vierte Kammer (P4) mit einem vierten Druck (p4), wobei es sich bei der wenigstens einen vierten Kammer (P4) um eine Getriebekammer (P4) handelt, wobei die vierte Kammer (P4) mit einer Druckerfassungsvorrichtung (44) verbunden ist,
jeweils wenigstens eine Lippendichtung (L1, L2`, L2, L3) zwischen den Kammern (P1, P2, P2', P3, P4), die jeweils einem Differenzdruck (ΔpL1, ΔpL2', ΔpL2, ΔpL3) zwischen den benachbarten Kammern widerstehen kann, und
wenigstens einer elektronischen Steuerung (80), die wenigstens eine Datenspeichereinheit, wenigstens eine Datenverarbeitungseinheit und wenigstens eine Steuerbefehlausgabeeinheit aufweist, wobei in der Steuerung wenigstens ein Programm zum Bereitstellen eines auf der wenigstens einen elektronischen Steuerung (80) basierten Regelkreis für den zu regelnden Druck (p2-IST, p2'-IST, p3-IST, p4-IST) ausgeführt wird, mit den Verfahrensschritten:
Messen, Empfangen und Speichern des Drucks p0 und/oder des Druck p1-IST,
Festlegen und Speichern eines Druckaufschlags Δp1 und Berechnen eines Drucks p1-SOLL nach der Formel p1-SOLL= p0+ Δp1, wobei bevorzugt ein Prüfungsschritt vorgesehen ist, dass p1-SOLL größer als p0 ist,
Berechnen eines Referenzdrucks (pREF), wobei es sich bei dem Referenzdruck um den Druck p0 im ersten Raum (P0) + Druckaufschlags Δp1 oder den Druck (p1-IST) in der ersten Kammer (P1) handelt,
Messen und Empfangen wenigstens eines zu regelnden Ist-Drucks (p2-IST, p2'-IST, p3-IST, p4-IST);
Festlegen eines Differenzdrucks wenigstens einer Lippendichtung (ΔpL1-STEUERUNG, ΔpL2'-STEUERUNG, ΔpL2-STEUERUNG, ΔpL3-STEUERUNG),
Festlegen und Speichern eines Druckzuschlags (Δp4ZUSCHLAG) zwischen der dritten und der vierten Kammer (P3, P4),
Berechnen eines Solldruck (p2-SOLL, p2'-SOLL, p3-SOLL, p4-SOLL) mit wenigstens einer der nachfolgenden Formeln: 1. p2-SOLL = pREF - ΔpL1-STEUERUNG 2. p2`-SOLL = p2-IST - ΔpL2'-STEUERUNG oder p2`-SOLL = pREF - ΔpL1-STEUERUNG - ΔpL2'-STEUERUNG, 3. p3-SOLL = (p2-IST oder p2'-IST) - (ΔpL2-STEUERUNG oder ΔpL2'-STEUERUNG) oder p3-SOLL = pREF - ΔpL1-STEUERUNG - ΔpL2`-STEUERUNG - ΔpL2-STEUERUNG, und 4. p4-SOLL = p3-IST+ Δp4ZUSCHLAG oder p4-SOLL = pREF - ΔpL1-STEUERUNG - ΔpL2`-STEUERUNG - ΔpL2-STEUERUNG + Δp4ZUSCHLAG,
Berechnen einer Druckdifferenz Δpi zwischen pi-SOLL und pi-IST, wobei i die Nummer der Kammer ist, deren IST-Druck geregelt wird, und prüfen, ob Δpi in einem Bereich x<0<y liegt, wobei x, y eine untere Intervallgrenze und eine obere Intervallgrenze sind,
wobei, wenn Δpi in dem Bereich x<0<y liegt, das erste Druckluftschaltventil (21, 21', 31, 41) der wenigstens einen Kammer i (P2, P2', P3, P4) und das zweite Druckluftschaltventil (22, 23, 22', 23', 32, 33, 42, 43) der wenigstens einen Kammer i (P2, P2', P3, P4) so angesteuert werden, dass sie geschlossen sind, wobei, wenn Δpi > y ist, das erste Druckluftschaltventil (21, 21', 31, 41) der wenigstens einen Kammer i (P2, P2', P3, P4) so angesteuert wird, dass es geöffnet wird, wobei das zweite Druckluftschaltventil (22, 23, 22', 23', 32, 33, 42, 43) der wenigstens einen Kammer i (P2, P2', P3, P4) so angesteuert ist, dass es geschlossen ist, und wobei, wenn Δpi < x ist, das zweite Druckluftschaltventil (22, 23, 22', 23', 32, 33, 42, 43) der wenigstens einen Kammer i (P2, P2', P3, P4) so angesteuert wird, dass es geöffnet wird, wobei das erste Druckluftschaltventil (21, 21', 31, 41) der wenigstens einen Kammer i (P2, P2', P3, P4) so angesteuert ist, dass es geschlossen ist.
